Europäisches Patentamt

(19) European Patent Office

Office européen des brevets

(11) EP 0 877 056 A2

(12) EUROPEAN PATENT APPLICATION

(43) Date of publication:
11.11.1998 Bulletin 1998/46

(51) Int. Cl.⁶: **C08L 101/00**, C08L 57/00,
C08L 63/08, C08L 53/02

(21) Application number: 98202415.0

(22) Date of filing: 20.07.1994

(84) Designated Contracting States:
DE ES FR GB NL

(30) Priority: 13.12.1993 JP 311682/93
10.01.1994 JP 766/94
10.01.1994 JP 768/94
10.01.1994 JP 769/94
10.01.1994 JP 770/94
10.01.1994 JP 772/94
24.01.1994 JP 5639/94
05.04.1994 JP 67187/94
05.04.1994 JP 67188/94
09.05.1994 JP 94904/94
09.05.1994 JP 94905/94
16.05.1994 JP 100401/94

(62) Document number(s) of the earlier application(s) in
accordance with Art. 76 EPC:
94401666.6 / 0 658 603

(71) Applicant:
DAICEL CHEMICAL INDUSTRIES, LTD.
Sakai-shi Osaka-fu 590 (JP)

(72) Inventor: Ohtsuka, Yoshihiro
Otake-shi, Hiroshima-ken (JP)

(74) Representative:
Portal, Gérard et al
Cabinet Beau de Loménie
158, rue de l'Université
75340 Paris Cédex 07 (FR)

Remarks:
This application was filed on 15 - 07 - 1998 as a
divisional application to the application mentioned
under INID code 62.

(54) **A compatible blend containing an epoxy-modified block copolymer, a process, a thermoplastic resin composition, resin compositions and an asphalt composition containing an epoxy-modified block copolymer**

(57) Disclosed is a compatible blend which comprises (a) a resin having an affinity to an aromatic vinyl polymer, (b) a resin having reactivity to an epoxy group and (c) a compatibilizing agent comprising an epoxy-modified aromatic vinyl-conjugated diene block copolymer in which (i) a polymer block consisting of an aromatic vinyl compound and (ii) a polymer block consisting of a compound having a conjugated double bond are included, wherein remaining double bonds are partially or completely epoxidized.

The compatible blend exhibits small particle sizes dispersion in a scanning electron microscopic structure observation and an excellent homogeneity in outer appearance, resulting in exhibiting an improved flow property together with improved mechanical properties such as impact strength, compared to a compatible blend having a conventional compatibilizing agent which is an aromatic-conjugated diene block copolymer or an aromatic vinyl-conjugated diene block copolymer having epoxy groups at terminals.

Furthermore, the present invention relates to various resin compositions which comprise various resins and a modifier or stabilizer which is an epoxy-modified aromatic vinyl-conjugated diene block copolymer.

EP 0 877 056 A2

**Description**

FIELD OF THE INVENTION

The present invention relates to a compatible blend which comprises mixed thermoplastic resins and a compatibilizing agent which is an epoxy-modified aromatic vinyl-conjugated diene block copolymer, and a process for improving mechanical properties in an article molded therefrom.

In more detail, the present invention also relates to a compatible blend and a process in which the compatibility of mixed thermoplastic resins is improved by the addition of a compatibilizing agent, and whereby the compatible blend exhibits small particle size dispersion in scanning electron microscopic structure observation and excellent homogeneity in appearance, resulting in exhibiting an improved flow property together with improved mechanical properties, such as impact strength, compared to a compatible blend having a conventional compatibilizing agent which is an aromatic-conjugated diene block copolymer.

Furthermore, the present invention relates to a thermoplastic resin composition which comprises a thermoplastic resin and an impact modifier which is an epoxy-modified aromatic vinyl-conjugated diene block copolymer.

The thermoplastic resin composition exhibits an excellent flow property, and an article molded therefrom has excellent heat resistance and improved impact strength.

Still further, the present invention relates to a polyalkylene terephthalate resin composition which comprises a polyalkylene terephthalate, a carboxylic acid and an epoxy-modified aromatic vinyl-conjugated diene block copolymer.

An article molded from the polyalkylene terephthalate resin composition exhibits only a slight loss in improved mechanical strength even after repeatedly molding.

In addition, the present invention relates to a polycarbonate resin composition which comprises a polycarbonate, a compound having a functional group, and an epoxy-modified aromatic vinyl-conjugated diene block copolymer. An article molded from the polycarbonate resin composition has an excellent frosting surface without the addition of inorganic fillers and without embossing or frosting.

Besides, the present invention relates to a rubber-like resin composition which comprises a rubber-like polymer and an epoxy-modified aromatic vinyl-conjugated diene block copolymer.

Further, the present invention relates to an epoxy resin composition having an epoxy-modified aromatic vinyl-conjugated diene block copolymer.

An article molded from the epoxy resin composition has excellent ductility.

Also, the present invention relates to a vinyl chloride-based resin composition having an epoxy-modified aromatic vinyl-conjugated diene block copolymer.

Also, the present invention relates to a pressure-sensitive adhesive composition having an epoxy-modified aromatic vinyl-conjugated diene block copolymer.

Still further, the present invention relates to an asphalt composition which comprises asphalt and an epoxy-modified aromatic vinyl-conjugated diene block copolymer.

Even still further, the present invention relates to a vibration-damping material which comprises an asphalt composition.

BACKGROUND OF THE INVENTION

Numerous attempts to improve resins has been earnestly undertaken for many years by blending polymers having different properties.

In the blend of polymers, it is well known that various mechanical and physical properties in an article molded therefrom depend upon compatibility between blended polymers.

Many publications, for example, US Patents 4,011,285, 4,562,222, 4,564,655, 4,677,148, Japanese Patent Unexamined Publication Nos. 11486/1972 (DE 2159325-B), 75651/1975 (no-family), 100840/1981 (no-family), 174645/1984, 100809/1992 (various compatible blends using an aromatic-diene copolymer having epoxy groups at terminal) and WO 84/04104 (a compatible blend of a polycarbonate and a styrenic copolymer) reveal a method or compatibilizing agent in order to improve compatibility between blended polymers or in order to improve the impact strength of resin.

Styrene-based thermoplastic elastomers are used as a compatibilizing agent or impact modifier in publications.

For example, a styrene-butadiene-styrene block copolymer has been conventionally known as one of such styrene-based thermoplastic elastomers.

However, a problem arises in that the dispersion state, impact resistance, heat resistance and processability in a blend of resins cannot be sufficiently improved by conventional styrene-butadiene-styrene block copolymer.

Furthermore, polyalkylene terephthalate resin, typified by polyethylene terephthalate and polybutylene terephthalates has been used in parts for cars, electric or electronic apparatuses, etc. , because of its excellent mechanical properties. However, polyalkylene terephthalate has poor impact strength.

Many publications, for example, Japanese Patent Unexamined Publication Nos. 144452/1976, 32045/1977, 117049/1978 reveal a method in order to improve impact strength in a polyalkylene terephthalate, in which a modified polyolefin, particularly an olefinic copolymer comprising a glycidyl ester alpha-olefine and an alpha/beta unsaturated carboxylic acid is used as an excellent impact modifier.

However, a problem arises in that long-awaited improved mechanical properties in an article molded from a polyalkylene terephthalate resin composition having conventional modifiers are reduced after repeated molding.

It goes without saying that repeated molding is important from the viewpoint of efficient resource use, for example, inferior molded articles or molding wastes derived from a sprue, runner and gate in a molding die frequently used together with virgin polymers in molding.

In addition, aromatic polycarbonate resin has been widely used because of its excellent mechanical strength, weatherability, light stability and heat resistance.

However, an article molded from aromatic polycarbonate resin generally has a glossy surface. Although a glossy surface is desirable depending upon the use, a frosted surface is rather desirable in a computer or typewriter keyboard or housing, housings for various electric apparatuses and certain parts for cars, and the like.

A frosted surface in an molded article can be obtained by embossing the surface or by the addition of inorganic fillers, such as finely powdered silica, silicates or alumina to resins to be molded.

However, frosting by embossing is an additional process, resulting in increased cost. Furthermore, a surface frosted by embossing frequently is worn away by abrasion, resulting in possible regeneration of a glossy surface.

Furthermore, the addition of inorganic fillers to resins may adversely affect physical and mechanical properties such as impact strength.

Even the use of polymer-based frosting agents also may adversely affect mechanical properties such as impact strength and important physical properties such as heat distortion temperatures, weatherability, and light stability.

Many publications, for example, Japanese Patent Unexamined Publication Nos. 193950/1984, 20955/1985, 174257/1986 and 156851/1988 reveal a method in order to improve a frosting property in aromatic polycarbonate without the use of inorganic fillers, mechanical properties, and heat resistance, in which butadiene-based rubbery polymers are used.

However, a problem arises in that their aromatic polycarbonate composition frequently exhibits insufficient weatherability in the use of butadiene-based rubbery polymers.

As described hereinabove, sufficient weatherability, mechanical properties, and frosting property can not be simultaneously improved in a conventional polycarbonate-based resin composition.

Further, it is known that epoxy resin is a compound having epoxy groups which is reactive and which is widely used in various industrial materials such as coatings and adhesives, and electric apparatuses fields.

Recently, mainly used on a large scale are so-called epi-bis or novolak epoxy resins produced by reacting bisphenol A with epichlorohydrin or by reacting novolak phenol with epichlorohydrin in the presence of alkali catalysts. Furthermore, cycloaliphatic epoxy resins have been also used in the field.

This is because of characteristics such as excellent mechanical and adhesive properties, surface smoothness, water resistance, electrical properties and curability.

A vinyl chloride-based resin composition has been widely used in the form of sheets or film because of excellent properties such as economical cost, excellent weatherability, moldability, and gas barrier properties.

However, a problem arises in that it readily causes thermal decomposition mainly due to dehydrochlorination in molding during heating, resulting in deteriorated mechanical properties and coloring, both of which are remarkable disadvantages.

In order to prevent the thermal decomposition of vinyl chloride-based resin composition, one or more heat stabilizers such as metal salts of organic acids or organic tin compounds, and the like, have been satisfactorily used in molding thereof.

However, thermal stabilizers such as metal salts, particularly cadmium and lead salts, are poisonous, resulting in limited application.

Instead of using cadmium or lead salts, a combined use of other metal salts or the use of organic heat stabilizers such as epoxy compounds, polyvalent alcohols, organic phosphorus compounds, organic sulfur compounds, phenol compounds, beta-diketone compounds, and the like are proposed. However, thermal stabilizers are not sufficient in stabilizing for a vinyl chloride-based resin composition.

A pressure-sensitive adhesive composition, particularly, a hot-melt pressure-sensitive adhesive composition, has attracted attention because of its remarkable economic advantages of being harmless, saving resources, and high productivity compared to solvent or emulsion adhesives.

Styrene-butadiene-styrene block copolymer, which is a thermoplastic elastomer composed of aromatic vinyl compounds and conjugated diene compounds, is being put to use as a component in a pressure-sensitive adhesive composition in the fields of pressure-sensitive adhesive tapes and labels.

Ihermoplastic elastomer composed of aromatic vinyl compounds and conjugated diene compounds has a general configuration, for example, $(A-B)_nA$, $(B-A)_n$ and $(A-B)_{n+1}X$ [wherein, A is an aromatic vinyl compound polymer block, B is a conjugated diene compound polymer block X is the residual group of a coupling agent, and n is an integer of more than 1].

However, the pressure-sensitive adhesive composition having the thermoplastic elastomer does not have a good balance of pressure-sensitive adhesive properties and holding power.

Besides, many publications, for example, Japanese Patent Unexamined Publication No. 282235/1989 reveal an asphalt composition having a modifier which is an atactic polypropylene having a specified structure.

However, the asphalt composition has poor temperature and storage properties.

Japanese Patent Examined Publication Nos. 17319/1972 and 36949/1984 reveal an asphalt composition having a block copolymer in which monoalkenyl compound and conjugated diene are copolymerized.

However, the asphalt composition has high melt viscosity and poor storage stability and heat resistance.

From the above-described viewpoints, and as a result of studies by the present inventors, it has been found that various mechanical properties in an article molded from a compatible blend or thermoplastic resin composition, heat resistance in an article molded from polyalkylene terephthalate resin composition, surface frosting in an article molded from polycarbonate resin composition, tensile strength and adhesive properties in epoxy resin composition, heat stability in vinyl chloride-based resin composition, a pressure-sensitive properties in a pressure-sensitive adhesive composition, and flow, storage stability, and vibration damping properties in the asphalt composition can be improved by using epoxy-modified aromatic vinyl-conjugated diene block copolymer.

## SUMMARY OF THE INVENTION

An object of the present invention is to provide a novel thermoplastic compatible blend including epoxy-modified aromatic vinyl-conjugated diene block copolymer exhibiting excellent mechanical properties in an article molded therefrom and an excellent flow property.

A second object of the present invention is to provide a method for improving mechanical properties in an article molded from a resin composition.

A third object of the present invention is to provide a thermoplastic resin composition including epoxy-modified aromatic vinyl-conjugated diene block copolymer exhibiting excellent mechanical properties such as improved impact strength and excellent heat resistance in an article molded therefrom.

A fourth object of the present invention is to provide a polyalkylene terephthalate composition having excellent mechanical properties even after repeated molding.

A fifth object of the present invention is to provide a polycarbonate resin composition having excellent frosting properties in an article molded therefrom without the addition of inorganic fillers.

A sixth object of the present invention is to provide a rubber-like resin composition which comprises rubber-like polymer and epoxy-modified aromatic vinyl-conjugated diene block copolymer.

A seventh object of the present invention is to provide an epoxy resin composition, having excellent mechanical properties, which comprises epoxy resin and epoxy-modified aromatic vinyl-conjugated diene block copolymer.

An eighth object of the present invention is to provide a vinyl chloride-based resin composition, having excellent heat resistance, which comprises vinyl chloride-based resin and epoxy-modified aromatic vinyl-conjugated diene block copolymer.

A ninth object of the present invention is to provide a pressure-sensitive adhesive composition, having excellent tackiness, which comprises resin having tackiness and epoxy-modified aromatic vinyl-conjugated diene block copolymer,

A tenth object of the present invention is to provide an asphalt composition having excellent mechanical properties and a good balance of physical properties, storage stability, and processability, which comprises asphalt and epoxy-modified aromatic vinyl-conjugated diene block copolymer.

An eleventh object of the present invention is to provide a vibration-damping material having an excellent loss compliance, which comprises asphalt and epoxy-modified aromatic vinyl-conjugated diene block copolymer.

## BRIEF DESCRIPTION OF THE DRAWING

Figure 1 is an FT-NMR absorption spectra chart related to epoxy-modified block copolymer obtained in Synthesis Example 1.

Figure 2 is an FT-NMR absorption spectra chart related to epoxy-modified block copolymer obtained in Synthesis Example 5.

Figure 3 is an FT-NMR absorption spectra chart related to epoxy-modified block copolymer obtained in Synthesis Example 7.

Figures 4 and 5 are electron microscopic photographs of fractured surface related to test pieces molded from polybutylene terephthalate compositions using aromatic diene block copolymers before epoxidation.

Figures 6, 7 and 8 are those of fractured surface related to test pieces molded from polybutylene terephthalate compositions using epoxidized aromatic diene block copolymers.

DETAILED DESCRIPTION OF THE INVENTION

The present invention is described hereinafter in more detail.

All aspects of the present invention essentially include the component (c) epoxy-modified aromatic vinyl-conjugated diene block copolymer.

The component (c) epoxy-modified aromatic vinyl-conjugated diene block copolymer in the present invention is employed as a compatibilizing agent for resins not having compatibility, an impact modifier for thermoplastic polymers, an agent for preventing heat degradation in molding polyalkylene terephthalate resins, a surface frosting agent for aromatic polycarbonate resins, a modifier for rubber-like polymers, a modifier for epoxy resins, a thermal stabilizer for vinyl chloride-based resins, a modifier for pressure-sensitive adhesives, and a modifier for asphalt.

The component (c) epoxy-modified aromatic vinyl-conjugated diene block copolymer includes (i) a polymer block consisting of an aromatic vinyl compound and (ii) a polymer block consisting of a compound having a conjugated double bond, wherein remaining double bonds are epoxidized, as an essential chemical structure.

In the component (c) epoxy-modified aromatic vinyl-conjugated diene block copolymer, the aromatic vinyl compound specifically includes, for example, styrene, alpha-methylstyrene, vinyl toluene, p-tert-butylstyrene, divinylbenzene, p-methyl styrene, 4-n-propyl styrene, 2,4-dimethylstyrene, 3,5-diethyl styrene, 1, 1-diphenylstyrene, 2,4,6-trimethyl styrene, 4-cyclohexylstyrene, 3-methyl-5-n-hexyl styrene, and the like.

Although one or more of aromatic vinyl compounds may be used, styrene is frequently and preferably used.

In the component (c) epoxy-modified aromatic vinyl-conjugated diene block copolymer, the compound having a conjugated double bond specifically includes, for example, butadiene, isoprene, 1,3-pentadiene, 2,3-dimethyl-1,3-butadiene, piperylene, 3-butyl-1,3-octadiene, 1-phenyl-1,3-butadiene, 1,3-octadiene, 4-ethyl-1,3-hexadiene, and the like.

Although one or more of compounds having a conjugated double bond may be used, butadiene, isoprene, piperylene and mixtures thereof are frequently and preferably used,

The block copolymer in the present invention essentially includes a polymer block A consisting of aromatic vinyl compound and polymer block B consisting of the compound having a conjugated double bond.

The copolymerization ratio of the aromatic vinyl compound with respect to the compound having a conjugated double bond is generally 5/95 to 70/30, preferably 10/90 to 60/40.

The number average molecular weight of the block copolymer to be employed in the present invention is generally from 5,000 to 600,000, preferably 10,000 to 500,000, and the molecular weight distribution [the ratio (Mw/Mn) of a weight average molecular weight (Mw) to a number average molecular weight (Mn)] is less than 10.

The molecular structure of the block copolymer to be employed in the present invention may be any of linear, branched and radial types and any combination thereof.

The block copolymer consisting of the aromatic vinyl compound and compound having a conjugated double bond is represented by general configurations, for example, of $(A-B)_nA$, $(B-A)_n$ and $(A-B-)_4Si$, and the like.

Of them, the (A-B)nA type copolymer is generally employed.

Unsaturated bonds remaining in the block copolymer derived from a conjugated double bond may be partially hydrogenated.

Copolymerization of the above-mentioned aromatic vinyl compound and compound having a conjugated double bond is effected in a non polar solvent, specifically an aromatic hydrocarbon such as benzene, toluene, xylene, ethylbenzene and the like, and aliphatic hydrocarbon such as n-hexane, cyclohexane, and the like, in the presence of an organolithium initiator such as methyllithium, n-butyllithium, n-decyllithium, tert-butyllithium, phenyllithium, naphthyllithium, p-tolyllithium, cyclohexyllithium, cyclophenyllithium, and the like.

The amount of organolithium initiator can vary depending on the desired molecular weight of the final product, but generally would be the from 1 to 50 gram millimole based on 100 grams of monomers.

The block copolymer is prepared by a polymerization process employing sequential polymerisation of the above-mentioned aromatic vinyl compound and compound having a conjugated double bond.

In sequential polymerization, non elastomeric blocks or segments are first formed by multiple additions of aromatic vinyl compound and organolithium initiator. Subsequently, the compound having a conjugated double bond is added and polymerized to form an elastomeric polymer block.

Polymerization may be carried out at approximately -20 °C to 150 °C, preferably 20 °C to 100 °C. Although the reaction period would depend upon polymerization conditions, it is generally within 48 hours, preferably up to 24 hours.

At the conclusion of polymerization, a poly-functional treatment agent is added to the unquenched reaction mixture.

The poly-functional treatment agent which is allowed to react must contain at least three reactive sites capable of reacting with the lithium-carbon bond in the polymer and thereby coupling the agent to the polymer at this bond. For this reason, compounds containing active hydrogen atoms such as water, alcohols, acids, and the like are to be avoided in polymerization since such compounds replace the lithium atom with hydrogen and do not effect the desired coupling.

Types of poly-functional treatment agents which can be employed include polyepoxides, polyisocyanates, polyimides, polyaldehydes, polyketones, polyanhydrides, polyesters, polyhalides, and the like.

Although any polyepoxides can be preferably employed, those which are liquid are especially preferred because they can be readily handled and form a relatively small nucleus for the polymer.

Preferred polyepoxides include epoxidized hydrocarbon polymer such as epoxidized liquid polybutadiene and epoxidized vegetable oils such as epoxidized soybean oil and epoxidized linseed oil, and the like.

The amount of poly-functional treatment agent to be employed is approximately 1.0 to 1.5 equivalents of poly-functional treatment agent based on the lithium present in the resulting copolymer.

After polymers have been allowed to react with the poly-functional treatment agent, they are recovered by treatment with a material containing active hydrogen such as an alcohol.

Copolymerization may be carried out by one-stage copolymerization.

In one-stage copolymerization, the block copolymer is formed by the difference in reaction velocities between the aromatic vinyl compound and compound having a conjugated double bond.

Block copolymer consisting of the aromatic vinyl compound and compound having a conjugated double bond, the preparation processes thereof, and the uses thereof are disclosed in detail, for example, in US Patents 3,265,765, 3,280,084, 3,281,383, 3,333,02, 3,432,323, 3,507,934, 3,607,977, 3,637,554, 3,639,517, 3,652,732, 3,792,005, 3,872,068, 3,993,613, 4,051,197, 4,080,407, 4,086,298, 4,584,346, 4,704,434, 4,879,34-5,001,199, 5,039,755, 5,130,377, and 5,264,480, Japanese Examined Patent Publication Nos. 23798/1965, 17979/1968, 32415/1971 and 28925/1981, etc.

Epoxy-modified aromatic vinyl-conjugated diene block copolymer can be prepared by epoxidation of unsaturated bonds remaining derived from a conjugated double bond in the thus-obtained block copolymer.

The epoxidation can be carried out using an epoxidation agent such as peracids or hydroperoxides.

Peracids include performic acid, peracetic acid perpropionic acid, perbenzoic acid, trifluoroperacetic acid, and the like. Of these peracids, peracetic acid is the preferred epoxidation agent, because it is available on an industrial basis at a moderate price and has a high stability.

Hydroperoxides include hydroperoxide, tertiarybutylhydroperoxide, cumenperoxide, metachloroperbenzoic acid, and the like.

In the epoxidation, a catalyst can be used as appropriate to the circumstances.

For example, in the case when peracetic acid is used as an epoxidation agent, an alkali such as sodium carbonate and an acid such as sulfuric acid can be used as a catalyst.

Furthermore, in the case of using hydroperoxides, it is possible to obtain a catalytic effect, for example, using a mixture of tungstic acid and sodium hydroxide with hydrogen peroxide, or hexacarbonylmolybudenum with tertiary butyl hydroperoxide.

The epoxidation is carried out in the absence or presence of a solvent, while controlling the reaction temperature according to the apparatus to be used and properties of raw materials.

The temperature region of the epoxidation can be selected based on the reactivity of the epoxidation agent.

In the case of peracetic acid, which is the preferable epoxidation agent, the preferred temperature is 0 to 70 °C.

If the temperature is under 0 °C, the reaction velocity is slow but, if the temperature exceeds 70 °C, peracetic acid can decompose.

In tertiary butylhydroperoxide/molybdenumdioxide diacetyl acetate. which is an example of a hydroperoxide, the preferable temperature is 20 °C to 150 °C, based on the same consideration.

The use of solvents for dilution is effective for lowering the reaction velocity of rain materials and stabilizing the epoxidation agent.

In the case when peracetic acid is used as the epoxidation agent, preferred solvents include aromatic compounds such as benzene, toluene, and xylene, a hydrocarbon such as hexane and cyclohexane, a halogenated compound such as carbontetrachloride and chloroform, and ester compounds such as ethyl acetate.

Of these solvents, ethyl acetate is especially preferred.

The molar ratio of the epoxidation agent to be used with respect to unsaturated bonds is selected based on the proportion of unsaturated bonds which it is desired to retain.

When preparing epoxy compositions having many epoxy groups, an equal or higher molar ratio of epoxidation agents to unsaturated bonds is preferably used, but using amounts of epoxidation agents at a molar ratio exceeding 10/1 with respect to unsaturated bonds is not preferable because of the cost and side reactions described hereinafter. With peracetic acid, a preferable molar ratio is 1/1 to 5/1.

The preferred epoxy equivalent in the epoxy-modified aromatic vinyl-conjugated diene block copolymer is 140 to 5,000, preferably 200 to 2700.

The epoxy-modified aromatic vinyl-conjugated diene block copolymer having epoxy equivalent of less than 140 cannot be substantially prepared in an industrial fashion, because aromatic vinyl-conjugated diene block copolymer which is a starting material generally has a content of diene moiety of 90 % by weight at most.

Even though the diene moiety is completely epoxidized, resultant epoxy groups are partially ring-opened, resulting in partially gelling and not attaining to values more than epoxy equivalent of 140.

On the other hand, in the case when the epoxy equivalent exceeds 5,000, compatibility with resin would become poor.

Epoxy-modified aromatic vinyl-conjugated diene block copolymer obtained can be separated from a crude reaction solution by appropriate procedures, for example, reprecipitation with a bad solvent, solvent removed by distillation after copolymer was poured into hot water while stirring, or by a direct solvent removal.

Epoxy-modified aromatic vinyl-conjugated diene block copolymer, preparation processes thereof, and uses thereof are disclosed in detail, for example, in US Patents 3,551,518, 3,555,112, 3,607,982, 3,699,184, 4,051,199, 4,131,725, 4,135,037, 4,341,672, 5,229,464, etc.

According to a first aspect of the present invention, there is provided a compatible blend which comprises (a) resin having an affinity to an aromatic vinyl polymer, (b) resin having a reactivity to an epoxy group and (c) epoxy-modified aromatic vinyl-conjugated diene block copolymer in which (i) polymer block consisting of an aromatic compound and (ii) polymer block consisting of a compound having a conjugated double bond are included, wherein remaining double bonds are partially or completely epoxidized.

In the first aspect of the present invention which is a compatible blend, the Component (c) epoxy-modified aromatic vinyl-conjugated diene block copolymer is employed as a compatibilizing agent.

In the compatible blend, the component (a) resin having an affinity to aromatic vinyl polymer includes, for example, styrene-based resins (a polystyrene, acrylonitrile-styrene copolymer, acrylonitrile-butadiene-styrene copolymer, acrylonitrile-acrylate-styrene copolymer, acrylonitrile-ethylene-propylene-styrene copolymer, a blend of acrylonitrile-styrene copolymer and chlorinated polyethylene, methylmethacrylate-butadiene-styrene copolymer, high-impact polystyrene, styrene-butadiene copolymer, and the like), aromatic polyethers (polyphenylenether and the like), polycarbonate resin and mixtures thereof.

In the first aspect of the present invention, the wording "a resin having reactivity to an epoxy group" means that a resin has a functional group such as carboxylic, hydroxyl, amino, and the like, or bonds such as ester, amide, and the like.

The component (b) resin having reactivity to an epoxy group specifically includes, for example, polyester resin [polyethylene terephthalate, polybutylene terephthalate, polycarbonate, and the like], polyamide resin [6-nylon, 6,6-nylon, 4,6-nylon, 11-nylon, 12-nylon, and the like], polyimides, polyamideimide, polyolefin having carboxylic groups [ethylene(meth)acrylic acid copolymer, maleic acid-modified polypropylene, and the like], a polyvinyl acetate, ethylene-vinyl acetate copolymer, and a blend thereof.

In the compatible blend, the preferred combination of the component (a)/component (b) or the component (b)/component (b) is selected from the group consisting of modified polyphenylene ether/polybutylene terephthalate, modified polyphenylene ether/polyamide, acrylonitrile-butadiene-styrene copolymer/polybutylene terephthalate, modified polyphenylene ether/maleic anhydride modified polypropylene, acrylonitrile-butadiene-styrene copolymer/polyamide, modified polyphenylene ether/polycarbonate, acrylonitrile-butadiene-styrene copolymer/polyethylene terephthalate, acrylonitrile-butadiene-styrene copolymer/polycarbonate modified polyphenylene ether/polyethylene terephthalate, polybutylene terephthalate/polyamide.

Of the above-described combinations, modified polyphenylene ether/polycarbonate, acrylonitrile-butadiene-styrene copolymer/polyamide and modified polyphenylene ether/polyethylene terephthalate can be remarkably improved in impact strength.

The compatible blend of the first aspect of the present invention includes 5 to 95 % by weight of the component (a), 95 to 5 % by weight of the component (b), and 0.1 to 50 %, preferably from 1 to 20 % by weight of the component (c) based on the total amount of compatible blend.

In the case when the component (a) or (b) exceeds 95 % or is less than 5 % by weight, excellent mutual properties are not shown in the compatible blend.

In the case of when the component (c) exceeds 50 %, its compatibilizing effect is lowered.

In the case when the component (c) is less than 0.1 %, its use of the component (c) becomes meaningless.

Furthermore, the compatible blend of the present invention may be mixed with less than 90 % by weight of other resins.

Other resins include thermosetting resin [formaldehyde resin, phenol resin, amino resin, unsaturated polyester resin, epoxy resin, diallyl phthalate resin, silicone resin, thermosetting polyurethane, and the like], thermoplastic resin such as polyolefin resin [polyethylene, polypropylene, ethylene-alpha-olefin copolymer, propylene-alpha-olefin copolymer, poly-4-methylpentene, polybutene, and the like], polyalkyl(meth)acrylate, polyvinyl chloride, ionomer, polyacetal, polyarylate, polysulfone, polyethersulfone, polyphenylenesulfide, elastomers [ethylene-propylene rubbers, ethylene-acrylic acid copolymers, EPDM, butadiene rubbers, styrene-(hydrogenated)conjugated diene copolymers, polyester elastomers, polyamide elastomers, thermoplastic polyurethanes, and the like].

Still further, the compatible blend of the present invention may be optionally mixed with other additives, for example, an antioxidant, heat stabilizer, ultra-violet ray absorbent, inorganic fillers such as silica, talc and carbon, plasticizer and softener such as an oil, and the like.

According to a second aspect of the present invention, there is provided a process for improving mechanical properties in a resin composition in which (a)a resin having an affinity to aromatic vinyl polymer and (b)a resin having a reactivity to an epoxy group are mixed, which comprises mixing with (c)an impact modifier comprising an epoxy-modified aromatic vinyl-conjugated diene block copolymer in which (i)a polymer block consisting of an aromatic compound and (ii)a polymer block consisting of a compound having a conjugated double bond are included, wherein remaining double bonds are partially or completely epoxidized.

The compatible blend of the first aspect in the present invention can be prepared by the process of the second aspect, in which the component (a)a resin having an affinity to aromatic vinyl polymer and the component (b)a resin having a reactivity to an epoxy group are mixed with the component (c)an epoxy-modified aromatic vinyl-conjugated diene block copolymer.

Blending can be carried out without any limitations with known mixers which include an extruder, Brabender, kneader and Banbury mixer, and the like.

According to a third aspect of the present invention, there is provided a thermoplastic resin composition which comprises (a)a thermoplastic resin and (c)an impact modifier comprising an epoxy-modified aromatic vinyl-conjugated diene block copolymer in which (i)a polymer block consisting of an aromatic vinyl compound and (ii)a polymer block consisting of a compound having a conjugated double bond are included, wherein remaining double bonds are partially or completely epoxidized.

In the thermoplastic resin composition, the component (c)an epoxy-modified aromatic vinyl-conjugated diene block copolymer is employed as an impact and heat resistance modifier.

In the thermoplastic resin composition, a first group of the component (a)a thermoplastic resin is a resin having an affinity to aromatic vinyl polymer. It specifically includes, for example, styrene-based resins such as polystyrene, acrylonitrile-styrene copolymer, acrylonitrile-butadiene-styrene copolymer, acrylonitrile-acrylate-styrene copolymer, acrylonitrile-ethylene-propylene-styrene copolymer, a blend of acrylonitrile-styrene copolymer and chlorinated polyethylene, methyl-methacrylate-butadiene-styrene copolymer, high-impact polystyrene, styrene-butadiene copolymer, and the like), aromatic polyethers(polyphenylenether, and the like), polycarbonate resin and mixtures thereof.

In the thermoplastic resin composition, another group of the component (a)a thermoplastic resin is a resin having reactivity to an epoxy group. It specifically includes, for example, polyester resin [polyethylene terephthalate, polybutylene terephthalate, polycarbonate, and the like], polyamide resin [6-nylon, 6,6-nylon, 4,6-nylon, 11-nylon, 12-nylon and the like], polyimides, polyamideimide, polyolefin having carboxylic groups [an ethylene-(meth)acrylic acid copolymer, maleic acid-modified polypropylene, and the like], polyvinyl acetate, ethylene-vinyl acetate copolymer and a blend thereof.

Of the above-described thermoplastic resins, polyester resin such as polybutylene terephthalate and polycarbonate, and polyamide resin such as 6-nylon can be remarkably improved in mechanical properties.

The thermoplastic resin composition of the third aspect of the present invention includes 40 to 99 %, preferably 80 % to 95 % by weight of the component (a) and 1 % to 60 %, preferably 5 to 20 % by weight of the component(c), based on the total amount of resin composition.

In the case when the component(c) exceeds 60 % by weight or is less than 1 % by weight, the use of the component (c) would become meaningless.

Blending of component (a) with the component (c) can be carried out without limitations with known mixers which include an extruder, Brabender, kneader and a Banbury mixer, and the like.

Furthermore, the thermoplastic resin composition of the present invention may be optionally mixed with other additives, for example, an antioxidant, heat stabilizer, ultraviolet ray absorbent, inorganic fillers such as silica, talc and carbon, plasticizer and softener such as an oil, and the like.

According to a fourth aspect of the present invention, there is provided a polyalkylene terephthalate resin composition which comprises (a)a polyalkylene terephthalate, (b)a carboxylic acid and (c)an epoxy-modified aromatic vinyl-conjugated diene block copolymer in which (i)a polymer block consisting of an aromatic compound and (ii)a polymer block consisting of a compound having a conjugated double bond are included, wherein remained double bonds are partially or completely epoxidized.

In the fourth aspect of the present invention which is a polyalkylene terephthalate resin composition, the component (c)an epoxy-modified aromatic vinyl-conjugated diene block copolymer is employed as a stabilizer for preventing heat degradation in molding together with the component (b)an organic acid.

That is, the polyalkylene terephthalate resin composition according to the present invention degrades mechanical properties only slightly even after repeatedly molding, whereas polyalkylene terephthalate resin alone significantly degraded mechanical properties.

Preferred examples of polyalkylene terephthalate resin specifically include polyethylene terephthalate, polybutylene terephthalate, polypropylene terephthalate, polyhexamethylene terephthalate and polycyclohexane dimethylene terephthalate, and the like.

Of them, polyethylene terephthalate and polybutylene terephthalate are more preferably employed because of their excellent mechanical properties.

The preferred polyalkylene terephthalate resin to be employed in the present invention has a relative viscosity of 1.2 to 2.0, more preferably 1.3 to 1.8.

In the case when the relative viscosity is less than 1.2, sufficient mechanical properties cannot be obtained in an article molded from the composition. In the case when the relative viscosity exceeds 2.0, however, an excellent surface gloss can not be obtained in an article molded from the composition.

It is noted that the relative viscosity is measured by 0.5 % o-chlorophenol solution at 25 °C.

The polyalkylene terephthalate resin composition of the fourth aspect of the present invention preferably includes from 1 to 100 parts, more preferably from 3 to 50 parts by weight of the component (c)an epoxy-modified aromatic vinyl-conjugated diene block copolymer based on 100 parts by weight of polyalkylene terephthalate resin.

In the case when the amount is less than 1 part by weight, heat degradation cannot be sufficiently prevented in an article molded from the composition. On the other hand, in the case when the amount exceeds 100 parts by weight, an excellent surface gloss cannot be obtained in an article molded from the composition.

Preferred examples of the component (b)an organic acid specifically include a compound having at least one carboxylic group, for example, an aromatic carboxylic acid such as benzoic acid, toluic acid, naphtoic acid, anthrathene carboxylic acid, biphenyl carboxylic acid, terephthalic acid, isophthalic acid, ortho-phthalic acid, naphthalene dicarboxylic acid, biphenyl dicarboxylic acid, trimesic acid, trimellitic acid, and the like; an aliphatic carboxylic acid such as caprylic acid, laurylic acid, tridecylic acid, myristic acid, palmitic acid, stearic acid, nonadecanoic acid, adipic acid, azelaic acid, sebacic acid, dodecanoic dicarboxylic acid, tricarballylic acid, and the like; a cycloaliphatic carboxylic acid such as cyclohexane dicarboxylic acid, cyclopentane dicarboxylic acid, an unsaturated carboxylic acid such as oleic acid, linoleic acid, tetrahydrophthalic acid and cinnamyl acid, and the like.

Of carboxylic acids, aromatic monocarboxylic acids, aliphatic monocarboxylic acids and aliphatic dicarboxylic acids having a long chain can be preferably employed. Carboxylic acids having a molecular weight of from 100 to 1000 are preferably employed.

One or more carboxylic acids may be employed.

The polyalkylene terephthalate resin composition preferably includes 0.001 to 10 parts, more preferably 0.005 to 5 parts by weight of carboxylic acids based on 100 parts by weight of polyalkylene terephthalate resin.

In the case when the amount is less than 0.001 parts by weight, heat degradation cannot be sufficiently prevented in an article molded from the composition. On the other hand, in the case when the amount exceeds 10 parts by weight, excellent mechanical properties cannot be obtained in an article molded from the composition.

Although the polyalkylene terephthalate resin composition of the present invention can be limitlessly prepared, for example, it can be preferably prepared by a method in which polyalkylene terephthalate resin, the component (b)an organic acid and the component (c)an epoxy-modified aromatic vinyl-conjugated diene block copolymer are pelletized after being melted and mixed with an extruder.

It is noted that a conventional additive can be mixed so long as the effect is not deteriorated in the polyalkylene terephthalate resin composition of the present invention.

Examples of the additive include fibrous or granular fillers, reinforcing materials, antioxidants, a conventional heat stabilizer [e.g. a hindered phenol, hydroquinone, thioether, phosphites, substituents thereof and a mixture thereof], an ultraviolet ray absorbent [e.g. , resorcinol, salicylate, benztriazol, benzophenone, and the like], a lubricant, a mold release agent [e.g. , stearates, montanic acid salts, esters, half esters, stearyl alcohol, ethylenebis(stearamide), and the like], a coloring agent such as dyes[e.g., nitrocin, and the like], pigments [e.g. , cadmium sulfide, phthalociyanine and carbon black], a flame retardant[e.g. , halides such as decabromodiphenylether and a carbonate bromide, melamines, cyanurates and phosphoruses], an auxiliary agent for a flame retardant [e.g., an antimony oxide], an anti-static agent [e.g. , a sodium dodecylbenzene sulfonate and a polyalkyleneglycol, and the like] and a crystal nucleus agent, and the like.

Furthermore, a small amount of other thermoplastic or thermosetting resins and or soft thermoplastic resin can be optionally mixed.

Examples of thermoplastic resin specifically include polyethylene, polypropylene, acrylic resin, fluorocarbon resin and polyamide, polyacetal, polycarbonate, polysulfone and polyphenyleneoxide, and the like.

Examples of thermosetting resin specifically include phenol resin, melamine resin, unsaturated polyester resin, silicone resin and epoxy resin, and the like.

Examples of soft thermoplastic resin specifically include ethylene-vinyl acetate copolymer, polyester elastomer and ethylene-propylene terpolymer, and the like. One or more of the resins can be mixed.

According to a fifth aspect of the present invention, there is provided a polycarbonate resin composition which comprises (a) an aromatic polycarbonate resin, (b)at least one selected from the group consisting of carboxylic acid, phosphoric acid, phosphorous acid, hypophosphoric acid and a compound (except carboxylic acid) having at least one of the carboxylic group, amino group, hydroxyl group, acid anhydride group or thiol group and (c)an epoxy-modified aromatic vinyl-conjugated diene block copolymer in which (i)a polymer block consisting of an aromatic compound and (ii)a polymer block consisting of a compound having a conjugated double bond are included, wherein remaining double bonds are partially or completely epoxidized.

In the fifth aspect of the present invention which is a polycarbonate resin composition, the component (c)an epoxy-modified aromatic vinyl-conjugated diene block copolymer is employed as an additive for giving an excellent frosting surface in an article molded from the composition together with the component (b)a carboxylic acid, phosphoric acid, phosphorous acid, phosphorous acid, hypophosphoric acid and a compound (except carboxylic acid) having at least one of the carboxylic group, amino group, hydroxyl group, acid anhydride group or thiol group.

The component (a) an aromatic polycarbonate resin to be employed in the present invention can be prepared by a phosgene method or a melting method of diphenyl carbonate and a diphenol compound, in which phosgene or diphenyl carbonate, and the like is a precursor for introducing carbonate bonds into the resin, which are well known processes.

Preferred examples of diphenol compounds specifically include 2,2-bis(4-hydroxyphenyl)propane which is the so-called bisphenol A, 2,2-bis(3,5-dibromo-4-hydroxyphenyl)propane, 2, 2-bis(3,5-dimethyl-4-hydroxyphenyl)propane, 1,1-bis(4-hydroxyphenyl)cyclohexane, 1,1-bis(3,5-dimethyl-4-hydroxyphenyl)cyclohexane, 1, 1-bis(4-hydroxyphenyl)decane, 1,4-bis(4-hydroxyphenyl)propane, 1, 1-bis(4-hydroxyphenyl)cyclododecane, 1, 1-bis(3,5-dimethyl-4-hydroxyphenyl)cyclododecane, 4,4-dihydroxydiphenylether, 4,4-thiodiphenol, 4,4-dihydroxy-3,3-dichlorodiphenylether, 4,4-dihydroxy-2,5-dihydroxydiphenylether, and the like.

One or more of the compounds can be employed.

Furthermore, a compound having three or more phenolic hydroxyl groups can be employed.

Preparation of aromatic polycarbonate resins is disclosed, for example, in Japanese Patent Unexamined Publication Nos. 215763/1988 and 124934/1990, etc.

In the polycarbonate resin composition, the component(c) is generally mixed in the amount of from 1 to 30 % by weight, preferably 3 to 15 % by weight based on the total amount of component (a) and the component(b).

In the case when the amount of the component (c) is less than 1 % by weight, sufficient frosting properties cannot be obtained in an article molded from the composition. On the other hand, in the case when the amount of the component (c) exceeds 30 % by weight, a mechanical strength would be lowered in an article molded from the composition.

In the polycarbonate resin composition, the component(b) includes a carboxylic acid, phosphoric acid, phosphorous acid, hypophosphoric acid and a compound (except carboxylic acid) having at least one of the carboxylic group, amino group, hydroxyl group, an acid anhydride group or thiol group.

Examples of carboxylic acid specifically include a carboxylic acid such as acetic acid, propionic acid, malonic acid, succinic acid, stearic acid, maleic acid, fumaric acid, itaconic acid, citric acid, benzoic acid, phthalic acid, isophthalic acid, terephthalic acid and a sulfonic acid such as benzene sulfonic acid and toluene sulfonic acid.

Furthermore, such the organic acids may have a functional group such as amino group, hydroxyl group, acid anhydride group and thiol group, and the like. Phosphoric acid, phosphorous acid and hypophosphoric acid are well-known inorganic acids which are not described in detail.

Examples of the compound (except carboxylic acid) having at least one of the carboxylic group, amino group, hydroxyl group, an acid anhydride group or thiol group specifically include diethylenetriamine, m-phenylenediamine, hexamethylenediamine, hydroxyethylmethacrylate, maleic anhydride, phthalic anhydride, hexahydrophthalic anhydride, pyromellitic anhydride, dodecylsuccinic anhydride, ethanethiol and phenylthiol, and the like.

Such the compounds may have two or more two functional groups which are same or different, together with other functional groups.

In the polycarbonate resin composition, the component(b) is generally mixed in the amount of from 0.001 to 1 part, preferably 0.01 to 0.5 part by weight based on the total amount 100 parts by weight of component (a) and the component(c).

In the case when the amount is less than 0.001 part by weight, sufficient frosting properties can not be obtained in an article molded from the composition. On the other hand, in the case when the amount exceeds 1 part by weight, mechanical strength and heat resistance, etc. would be lowered in an article molded from the composition.

Furthermore, the polycarbonate resin composition of the present invention, other resins and a conventional additive can be mixed so far as properties are not deteriorated. Examples of the conventional additive specifically include rubbery-like substances, a coloring agent such as pigments or dyes, reinforcing materials, fillers, a heat stabilizer, antioxidants, an ultraviolet ray absorbent, a lubricant, a mold release agent, a crystal nucleus agent, a plasticizer, a flow control agent and an anti-static agent, and the like.

Reinforcing materials or fillers specifically include finely powdered metals such as aluminum, iron or nickel, metal oxides, non-metallic materials such as carbon filaments, silicates, mica, aluminum silicate, talc, asbestos, titanium oxide, wollastonite, novaculite, potassium titanate, titanate whisker, glass flakes, glass beads, glass fibers and polymer fibers and the like. One or more of the reinforcing materials or fillers can be mixed.

Preferred reinforcing materials or fillers are glass beads.

Although reinforcing materials or fillers are employed in an amount of capable of reinforcing, they are generally employed in the range of 1 to 60 % by weight, preferably 5 to 50 % by weight based on the total amount of the composition.

In the case when the polycarbonate resin composition of the present invention includes a polycarbonate derived from brominated bisphenol, inorganic or organic antimony compounds may be further mixed in order to enhance a flame-retardation property attained by brominated bisphenol.

Furthermore, hindered phenol, phosphite, metal phosphates and metal phosphites, etc. may be mixed as a stabilizer and anti-oxidant.

In preparing the polycarbonate resin composition of the present invention, conventionally known methods can be used in order to mix the above-mentioned various components.

For example, the above-mentioned components are first dispersed and mixed with a high-speed mixer typified by a tumble mixer, a Henshel mixer, a ribbon-blender or a super mixer, and then they are suitably melted and mixed with an extruder, Banbury mixer and roll mixer, etc.

According to a sixth aspect of the present invention, there is provided a rubber-like resin composition which comprises (a)a rubber-like polymer and (c)an epoxy-modified aromatic vinyl-conjugated diene block copolymer in which (i)a polymer block consisting of an aromatic vinyl compound and (ii)a polymer block consisting of a compound having a conjugated double bond are included, wherein remaining double bonds are partially or completely epoxidized.

In the sixth aspect of the present invention which is a rubber-like resin composition, the component (c)an epoxy-modified aromatic vinyl-conjugated diene block copolymer is employed as a modifier for a rubber-like polymer.

Rubber-like polymer in the present invention includes natural rubbers and synthetic rubbers on the whole.

Examples of typical rubber-like polymer specifically includes styrene-butadiene rubber or hydrogenated material thereof, isoprene rubber or hydrogenated material thereof, nitrile rubber or hydrogenated material thereof, chloroprene rubber, butyl rubber, ethylene-propylene rubber, ethylene-propylene-diene rubber, ethylene-butene rubber, ethylene-butene-diene rubber, acrylic rubber, alpha/beta-unsaturated nitrile-acrylate-conjugated diene rubber, chlorinated polyethylene rubber, fluorocarbon rubber, silicone rubber, urethane rubber, epichlorohydrin rubber, polysulfide rubber, styrene-butadiene block copolymer or hydrogenated material thereof, and the like.

Of them, there can be preferably employed a saturated rubber or a low-unsaturated rubber such as hydrogenated styrene-butadiene rubber, hydrogenated nitrile rubber, ethylene-propylene rubber, ethylene-propylene-diene rubber, ethylene-butene rubber, ethylene-butene-diene rubber, acrylic rubber, chlorinated polyethylene rubber, fluorocarbon rubber, silicone rubber, urethane rubber, epichlorohydrin rubber, polysulfide rubber, hydrogenated styrene-butadiene block copolymer, alpha/beta-unsaturated nitrile-acrylate-conjugated diene rubber and modified rubber which introduces functional groups therein.

According to a seventh aspect of the present invention, there is provided an epoxy resin composition which comprises (a) an epoxy resin having at least one epoxy group in the molecule and (c)an epoxy-modified aromatic vinyl-conjugated diene block copolymer in which (i)a polymer block consisting of an aromatic vinyl compound and (ii)a polymer block consisting of a compound having a conjugated double bond are included, wherein remaining double bonds are partially or completely epoxidized.

In the seventh aspect of the present invention, examples of the component (a) an epoxy resin having at least one epoxy group in the molecule include bisphenol A type epoxy resin, bisphenol F type epoxy resin, cresol novolak type epoxy resin, alicyclic epoxy resin and phenol novolak type epoxy resin, and the like.

Specifically, there can be preferably employed Epikote 828, Epikote 1001, Epikote 1004 and Epikote 1009 manufactured by Shell, Ltd., corresponding products manufactured by other companies, for example, Epiklon 830 manufactured by Dainippon Ink, Ltd., which are bisphenol A type epoxy resin, 3,4-epoxycyclohexylmethyl-3,4-epoxycyclohexane carboxylate [Celloxide 2021 manufactured by Daicel Chemical Industries, Ltd. or ERL 4221 manufactured by Union Carbide Co.], epsilon-caprolactone-modified products thereof, trimethyl epsilon-caprolactone-modified products thereof, 3,4-epoxy-6-methylcyclohexylmethyl-3,4-epoxy-6-methylcyclohexane carboxylate, varelolactone modified products thereof and alicyclic epoxy resins having adipic acid-based polyester structures [ERL 4289 and ERL 4299 manufactured by Union Carbide Co.), and the like.

One or more of them may be employed.

In the epoxy resin composition, a curing agent for conventional epoxy resin is preferably employed.

Examples of curing agent include amines, polyamide resins, acid anhydrides, polymercaptan resins, novolak resins, dicyandiamide and amine-based complexes of phosphorus trifluoride, and the like.

Examples of amines specifically include alicyclic polyamines such as diethylenetriamine, triethylenetetramine, menthenediamine, metaxylylenediamine, bis(4-amino-3-methylcyclohexyl) methane, adducts of alicyclic polyamines with publicly-known epoxy compounds, reaction products of alicyclic polyamines with acrylonitrile, reaction products of the alicyclic polyamines with a ketone, aromatic polyamines such as metaphenylenediamine, diaminodiphenylmethane, diaminodiphenylsulfone, diaminodiphenylsulfide, adducts of aromatic polyamines with publicly-known epoxy compounds, secondary or tertiary amines and salts thereof such as tris(dimethylaminomethyl)phenol, piperidine, imidazoles and derivatives thereof, an admixture of the amines.

Examples of polyamide resins specifically include reaction products of aliphatic acids, dimer acids or trimer acids with an aliphatic polyamine.

Examples of acid anhydrides specifically include phthalic anhydride, trimellitic anhydride, pyromellitic anhydride, benzophenonetetracarboxylic dianhydride, methyltetrahydrophthalic anhydride, methylhexahydrophthalic anhydride, succinic anhydride, dodecenylsuccinic anhydride and an admixture thereof.

Examples of novolak resins specifically include a resinous condensation product having a low molecular weight of phenol, an admixture of phenol and cresol and dihydroxybenzenes with formaldehyde.

Examples of the amine-based complexes of phosphorus trifluoride specifically include complexes of phosphorus trifluoride with an amine compound having a low molecular weight such as monoethylamine, piperidine, aniline, butylamine, dibutylamine, cyclohexylamine, dicyclohexylamine, tributylamine and triethanol amine, and the like.

Furthermore, there can be also employed other curing agents which include diazonium salts, iodonium salts, bromonium salts and sulfinium salts, and the like of an ultra strong acid such as boron tetrafluoride, phosphorus hexafluoride and arsenic hexafluoride, and the like.

In the epoxy resin composition, there can be mixed additives which specifically include silica, gypsum, powdered quartz, calcium carbonate, kaolin, clay, mica, alumina, hydrated alumina, talc, dolomite, zircon, silicate, titanium compounds, molybdenum compounds and antimony compounds, pigments and antioxidants.

The epoxy resin composition of the seventh aspect in the present invention includes from 95 to 5 parts, preferably from 80 to 20 parts by weight of the component (a) and from 5 to 95 parts, preferably 20 to 80 parts by weight of the component(c) based on the total amount of epoxy resin composition.

In the case when the component (a) or (c) exceeds 95 parts or is less than 5 parts by weight, an article molded from the epoxy resin composition would not exhibit well-balanced mechanical properties.

In the case when the component (c) exceeds 95 parts by weight, mechanical properties in the article would become lowered.

In the case when the component (c) is less than 5 parts, the use of the component (c) would become meaningless.

Components (a) and (c) may be mixed in the state of melting, by dissolving in solvents such as, for example, butyl acetate, toluene and benzene, and the like, and further by dry blending in the state of a powder.

According to an eighth aspect of the present invention, there is provided a vinyl chloride-based resin composition which comprises (a)a vinyl chloride-based resin and (c)an epoxy-modified aromatic vinyl-conjugated diene block copolymer in which (i)a polymer block consisting of an aromatic vinyl compound and (ii)a polymer block consisting of a compound having a conjugated double bond are included, wherein remaining double bonds are partially or completely epoxidized.

In the eighth aspect of the present invention, examples of the component (a)a vinyl chloride-based resin include homopolymer of vinyl chloride, copolymer of vinyl chloride with ethylene, propylene or vinyl acetate, and the like.

Furthermore, there are included a copolymer of vinyl chloride with vinyl ethers, esters of (meth)acrylic acid, and a copolymer of vinyl chloride with acrylic amide, acrylonitrile or maleimides, and the like.

Still further, there can be also employed a chlorinated vinyl chloride resin in which a vinyl chloride resin is further chlorinated.

The copolymers can be prepared by bulk polymerization, suspension polymerization, emulsion polymerization and solution polymerization.

The polymerization degree of the vinyl chloride-based resin is preferably 600 to 2500 or so.

The vinyl chloride-based resin composition of the present invention can be prepared by homogeneously melt mixing the above-mentioned vinyl chloride-based resin with the epoxy-modified aromatic vinyl-conjugated diene block copolymer.

Mixing is first carried out with a Henshel mixer or a ribbon blender, and the like, and then a Banbury mixer, an extruder or a roll mixer may be employed for melt mixing, which are limitlessly employed.

Furthermore, a continuous kneading machine may be also employed for melt mixing while quantitatively charging the components.

Mixing ratio of epoxy-modified aromatic vinyl-conjugated diene block copolymer is generally from 1 to 50 parts by weight, preferably from 5 to 40 parts by weight based on 100 parts by weight of the vinyl chloride-based resin.

In the case when the mixing ratio is less than 1 part by weight, the thermal stability cannot be improved in an article molded from the composition. On the other hand, in the case when the mixing ratio exceeds 50 part by weight, processability would be lowered.

Still further, metallic (Li, Na, K, Ca, Ba, Mg, Sr, Zn and Sn) salt of carboxylic acid, organic phosphoric acids or phenols and organic tin-based stabilizer may be mixed with the vinyl chloride-based resin composition of the present invention in order to accelerate heat stability.

Examples of carboxylic acid include monocarboxylic acid such as caproic acid, peralgonic acid, 2-ethylhexylic acid, caprylic acid, neodecanoic acid, undecylenic acid, lauric acid, myristic acid, palmitic acid, stearic acid, isostearic acid, 12-hydroxystearic acid, chlorostearic acid, 12-ketostearic acid, phenylstearic acid, licinol acid, linoleic acid, oleic acid, arachic acid, behenic acid, erucic acid, brassidin acid and the like, and further a mixture composed of natural oils such as aliphatic acid of animal oil, aliphatic acid of coconut oil, aliphatic acid of tung oil, aliphatic acid of soybean oil and aliphatic acid of linseed oil, benzoic acid, p-t-butylbenzoic acid, ethtylbenzoic acid, isopropylbenzoic acid, toluic acid, xylylic acid, salicylic acid, 5-t-octylsalicylic acid, naphtenic acid, cyclohexane carboxylic acid, and a monoester of a dicarboxylic acid such as oxalic acid, malonic acid, succinic acid, glutaric acid, adipic acid, pimelic acid, suberic acid, azelaic acid, sebacic acid, phthalic acid, isophthalic acid, terephthalic acid, oxyphthalic acid, chlorophthalic acid, aminophthalic acid, maleic acid, fumaric acid, cytolaconic acid, metaconic acid, itaconic acid and aconitic acid, and the like.

Furthermore, examples of organic phosphoric acids include mono-or di-octyl phosphoric acid, mono- or di-dodecyl phosphoric acid, mono- or di-octaoctyl phosphoric acid, mono- or di(nonylphenyl)phosphoric acid, nonylphenyl ester of phosphonic acid and stearyl ester of phosphonic acid, and the like.

Still further, examples of the phenol include phenol, cresol, ethylphenol, cyclohexylphenol, nonylphenol and dodecylphenol, and the like.

In addition, examples of organic tin-based stabilizer include dialkyl tin compounds such as mono- or dimethyl tin compound, mono- or dibutyl tin compound or mono- or dioctyl tin compound, and the like.

According to a ninth aspect of the present invention, there is provided a pressure-sensitive adhesive composition which comprises (a)a resin having tackiness and (c)an epoxy-modified aromatic vinyl-conjugated diene block copolymer in which (i)a polymer block consisting of an aromatic vinyl compound and (ii)a polymer block consisting of a compound having a conjugated double bond are included, wherein remaining double bonds are partially or completely epoxidized.

In the pressure-sensitive adhesive composition, the component (a) is a resin having tackiness in which there are included rosin-based resins, polyterpene-based resins, synthesized polyterpene-based resins, alicyclic hydrocarbon resins, coumarone-based resins, phenol-based resins, terpene/phenol-based resins, aromatic hydrocarbon resins and alicyclic hydrocarbon resins, and the like.

Of them, there can be preferably employed rosin-based resins, polyterpene-based resins and alicyclic hydrocarbon resins.

One or more of them may be employed.

Resin having tackiness is employed in the amount of 20 to 200 parts, preferably from 50 to 150 parts by weight based on the amount of 100 parts by weight of the component (c).

For an amount less than 20 parts or exceeding 200 parts, the pressure-sensitive adhesive composition of the present invention would not exhibit an excellent tackiness, holding power and cohesive strength.

In the pressure-sensitive adhesive composition, there may be mixed a softener such as naphthene-based process oils, paraffin-based process oils, liquid rubbers such as a liquid Polyisoprene rubber, a liquid state polyacrylate, a liquid polybutene, a liquid polyisoprene-isobutylene rubber, a liquid state acrylic rubber and a liquid state butadiene rubber, and the like. One or more of them may be employed.

The softener is employed in an amount less than 100 parts, preferably less than 80 parts by weight based on the amount of 100 parts by weight of the component (c).

In the pressure sensitive adhesive composition, there may be mixed various additives which specifically include stabilizers such as antioxidants and ultraviolet ray absorbents, inorganic fillers such as calcium carbonate, silica, talc, clay, titanium oxide, magnesium carbonate and carbon black, coloring agents and pigments.

Furthermore, in the pressure sensitive adhesive composition, there may be mixed elastomers which specifically include natural rubbers, polyisoprene rubbers, polybutadiene rubbers, styrene-butadiene rubbers, styrene-butadiene-styrene copolymers, styrene-isoprene-styrene copolymers, high-styrene rubbers, chloroprene rubbers, ethylene-propylene terpolymers, ethylene-propylene rubbers, acrylic rubbers, polyisoprene-isobutylene rubbers, polypentenamer rubbers, thermoplastic resins such as 1,2-polybutadiene, polybutene, polyethylenes, ethylene-vinyl acetate copolymers, ethylene-vinyl acetate-modified copolymers, ethylene-ethyl acrylate copolymers, atactic polypropylenes, ionomers, polystyrenes, styrene-acrylonitrile copolymers, styrene-based resins such as ABS, AES, MES and MBS, as far as the pressure sensitive adhesive properties are adversely affected. One or more of them may be employed.

The above-mentioned components may be mixed in a container mixer or a closed kneader while heating, optionally in nitrogen gas atmosphere.

Furthermore, the pressure-sensitive adhesive composition can be prepared by the hot-melt process and by a conventional solution or emulsion for mixing.

According to a tenth aspect of the present invention, there is provided an asphalt composition which comprises (a) asphalt and (c)an epoxy-modified aromatic vinyl-conjugated diene block copolymer in which (i)a polymer block consisting of an aromatic vinyl compound and (ii)a polymer block consisting of a compound having a conjugated double bond are included, wherein remaining double bonds are partially or completely epoxidized.

In the asphalt composition of the present invention, the component (a) includes a conventional asphalt such as straight asphalt, semi-blown asphalt and a mixture thereof without any limitations.

In particular, there can be preferably employed a straight asphalt having a penetration range from 40 to 120 and a semi-blown asphalt having a penetration range from 10 to 30 and a mixture thereof.

In the asphalt composition of the present invention, the component (a) can be employed in the mixing amount of from 20 to 500, preferably from 30 to 70 parts by weight based on 100 parts by weight of the component(c).

Furthermore, in the asphalt composition of the present invention, the component (a) can be also employed in the mixing amount of from 1 to 20, preferably from 5 to 15 parts by weight based on 100 parts by weight of the component(c) for the purpose of improving properties in the component(c).

Still further, in the asphalt composition of the present invention, there can be optionally mixed stabilizers such as antioxidants and photo-stabilizers.

Examples of the stabilizers include, for example, hindered phenol-based anti-oxidants such as 2,6-di-t-butyl-4-methylphenol, n-octadecyl-3-(4'-hydroxy-3,5'-di-t-butylphenyl)propionate, 2,2'-methylenebis(4-methyl-6-t-butylphenol), 2,2' -methylenebis(4-ethyl-6-t-butylphenol), 2,4-bis[(octylthio)methyl]-o-cresol), 2-t-butyl-6-(3-t-butyl-2-hydroxy-5-methylbenzyl)-4-methylphenyl acrylate, 2,4-di-t-amyl-6-(1-(3,5-di-t-amyl-2-hydroxyphensyl)ethyl]phenyl acrylate, sulphur-based anti-oxidants such as dilauryl thiodipropionate, laurylstearyl thiodipropionate, pentaerythritol tetrakis(beta-laurylthiopropionate), phosphor-based anti-oxidants such as tris(nonylphenyl)phosphite and tris(2,4-di-t-butylphenyl) phosphite, and the like.

Examples of photo-stabilizers include benztriazole-based ultraviolet ray absorbents such as 2- (2' -hydroxyl-5' -methylphenyl)benztriazole, 2-(2'-hydroxyl-3' ,5'-t-butylphenyl)benztriazole, 2-(2'-hydroxyl-3' ,5'-di-t-butylphenyl) -5-chlorobenztriazole and hindered amine-based photo-stabilizers, and the like.

In addition, the asphalt composition of the present invention may optionally include various additives for conventional asphalt compositions, for example, fillers or reinforcing materials such as silica, talc, calcium carbonate, powdered minerals, glass fibers and pigments, and the like.

Besides, the asphalt composition may include softeners such as paraffin-based-, naphthene-based- and aromatic-based-process oils, resins having tackiness such as coumarone-indene resins and terpene resins, foaming agents such as azodicarbonamide, olefinic thermoplastic resins such as atactic polypropylene, ethylene-ethylacrylate copolymers, aromatic-based thermoplastic resins having a low molecular weight, natural rubbers, synthesized rubbers such as polyisoprene rubbers, polybutadiene rubbers, styrene-butadiene rubbers, ethylene-propylene rubbers, chloroprene rubbers, acrylic rubbers, polyisoprene-isobutylene rubbers, polypentenamer rubbers, styrene-butadiene-based block copolymers and styrene-isoprene-based block copolymers, and the like.

In the case when the asphalt composition is used for pavement of roads, it is frequently used together with mineral aggregates such as crushed stones, sands and slag, and the like.

The asphalt composition of the present invention can be prepared without limitations in known mixers which include, for example, a caldron for melting, a roll mixer, a kneader, a Banbury mixer and an extruder, and the like.

According to an eleventh aspect of the present invention, there is provided a vibration-damping material which comprises the asphalt composition.

In the case when the asphalt composition of the present invention is used as a vibration-damping material, resin having tackiness such as an alicyclic petroleum resin is preferably mixed, resulting in exhibiting a more excellent vibration-damping property in high temperatures.

The asphalt composition of the present invention can be used as a vibration-damping material and as a waterproof or watertight material, a coating material for steels and a pavement for roads.

In the following, Synthetic Examples, Application Examples and Comparative Application Examples are described in order to specifically illustrate the present invention.

[Synthesis Example 1/Preparation of the component (c)an epoxy-modified aromatic vinyl-conjugated diene block copolymer]

A jacketed reaction vessel equipped with a stirrer, a reflux condenser and a thermometer was charged with 300 parts by weight of polystyrene-polybutadiene-polystyrene block copolymer [a trade name of TR2000 manufactured by Japan Synthetic Rubber, Ltd.) and 1500 parts by weight of ethyl acetate, followed by being dissolved.

Successively, 169 parts by weight of ethyl acetate solution having 30 % by weight of peracetic acid was continuously added dropwise, followed by epoxidizing while stirring at 40 °C for 3 hours. The reactant solution was cooled to ordinary temperatures, followed by being taken out of the reaction vessel.

Successively, large amounts of methanol were added to the solution to precipitate copolymer, then copolymer was filtered and washed by water, followed by being dried to obtain an epoxy-modified aromatic vinyl conjugated diene block copolymer having an epoxy equivalent of 470.

It is noted that the ratio of butadiene to styrene in TR2000 is 60/40. Epoxy-modified aromatic vinyl-conjugated diene block copolymer obtained was designated as copolymer A.

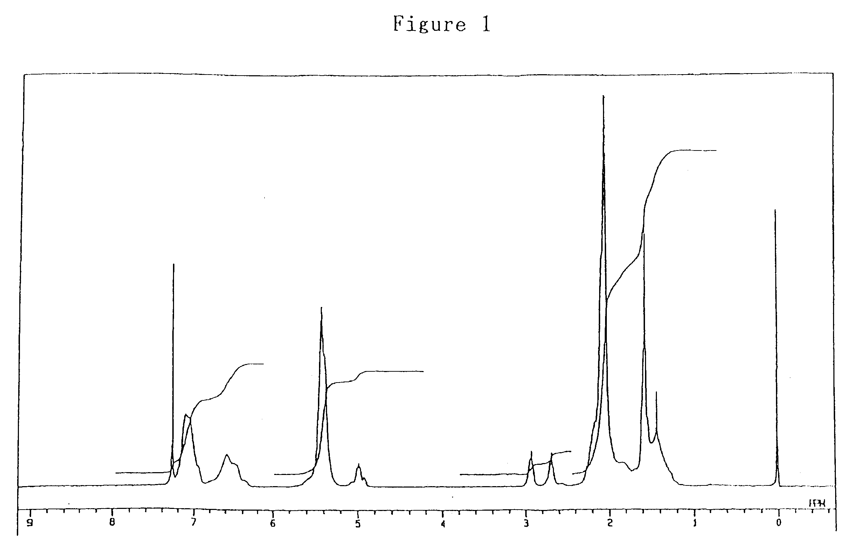

An FT-NMR absorption spectrum chart related to the epoxy-modified block copolymer obtained is shown in Figure 1.

It was confirmed by the Figure 1 that there decreased the peaks in 4.8-5.1 ppm and 5.2-5.6 ppm which depend upon a diene component after epoxidation, and then there were observed the peaks in 2.6-2.8 ppm and 2.8-3.0 ppm which depend upon epoxy groups derived from the epoxidation reaction.

[Synthesis Example 2/Preparation of the component (c)an epoxy-modified block copolymer]

A jacketed reaction vessel equipped with a stirrer, a reflux condenser and a thermometer was charged with 300 parts by weight of polystyrene-polybutadiene-polystyrene block copolymer [a trade name of TR2000 manufactured by Japan Synthetic Rubber,Ltd.] and 1500 parts by weight of ethyl acetate, followed by being dissolved.

Successively, 43 parts by weight of ethyl acetate solution having 30 % of peracetic acid was continuously added dropwise, followed by epoxidizing while stirring at 40 °C for 3 hours.

The reactant solution was cooled to ordinary temperatures, followed by being taken out of the reaction vessel.

Successively, large amounts of methanol were added to the solution to precipitate a copolymer, then copolymer was filtered and washed by water, followed by being dried to obtain an epoxy-modified copolymer having an epoxy equivalent of 1820.

Epoxy-modified aromatic vinyl-conjugated diene block copolymer obtained was designated as copolymer B.

[Synthesis Example 3/Preparation of the component (c)an epoxy-modified aromatic vinyl-conjugated diene block copolymer]

A jacketed reaction vessel equipped with a stirrer, a reflux condenser and a thermometer was charged with 300 parts by weight of polystyrene-polybutadiene-polystyrene block copolymer [a trade name of TR2400 manufactured by Japan Synthetic Rubber, Ltd.] and 1500 parts by weight of ethyl acetate, followed by being dissolved.

Successively, 113 parts by weight of ethyl acetate solution having 30 % by weight of peracetic acid was continuously added dropwise, followed by epoxidizing while stirring at 40 °C for 3 hours. The reactant solution was cooled to ordinary temperatures, followed by being taken out of the reaction vessel.

Successively, large amounts of methanol were added to the solution to precipitate a copolymer, and then the copolymer was filtered and washed by water, followed by being dried to obtain an epoxy-modified copolymer having an epoxy equivalent of 695. It is noted that the ratio of butadiene to styrene in TR2400 is 40/60.

The epoxy-modified aromatic vinyl-conjugated diene block copolymer obtained was designated as copolymer C.

[Synthesis Example 4/Preparation of the component (c)an epoxy-modified aromatic vinyl-conjugated diene block copolymer]

A jacketed reaction vessel equipped with a stirrer, a reflux condenser and a thermometer was charged with 300 parts by weight of polystyrene-polybutadiene-polystyrene block copolymer [a trade name of Kaliflex D1122 manufactured by Shell, Ltd.] and 1500 parts by weight of cyclohexane, followed by being dissolved.

Successively, 177 parts by weight of ethyl acetate solution having 30 % by weight of peracetic acid was continuously added dropwise, followed by epoxidizing while stirring at 40 °C for 3 hours. The reactant solution was cooled to ordinary temperatures, followed by being taken out of the reaction vessel.

Successively, large amounts of methanol were added to the solution to precipitate a copolymer, and then the copolymer was filtered and washed by water, followed by being dried to obtain an epoxy-modified aromatic vinyl-conjugated diene block copolymer having an epoxy equivalent of 448.

Epoxy-modified copolymer obtained was designated as copolymer D.

[Synthesis Example 5/Preparation of the component (c) an epoxy-modified aromatic vinyl-conjugated diene block copolymer]

A jacketed reaction vessel equipped with a stirrer, a reflux condenser and a thermometer was charged with 300 parts by weight of polystyrene-polyisoprene-polystyrene block copolymer [a trade name of Kaliflex TR1111 manufactured by Shell, Ltd.] and 1500 parts by weight of cyclohexane, followed by being dissolved.

Successively, 222 parts by weight of ethyl acetate solution having 30 % by weight of peracetic acid was continuously added dropwise, followed by epoxidizing while stirring at 40 °C for 3 hours. The reactant solution was cooled to ordinary temperatures, followed by being taken out of the reaction vessel.

Successively, large amounts of methanol were added to the solution to precipitate a copolymer, and then the copolymer was filtered and washed by water, followed by being dried to obtain an epoxy-modified aromatic vinyl-conjugated diene block copolymer having an epoxy equivalent of 362.

The epoxy-modified aromatic vinyl-conjugated diene block copolymer obtained was designated as copolymer E.

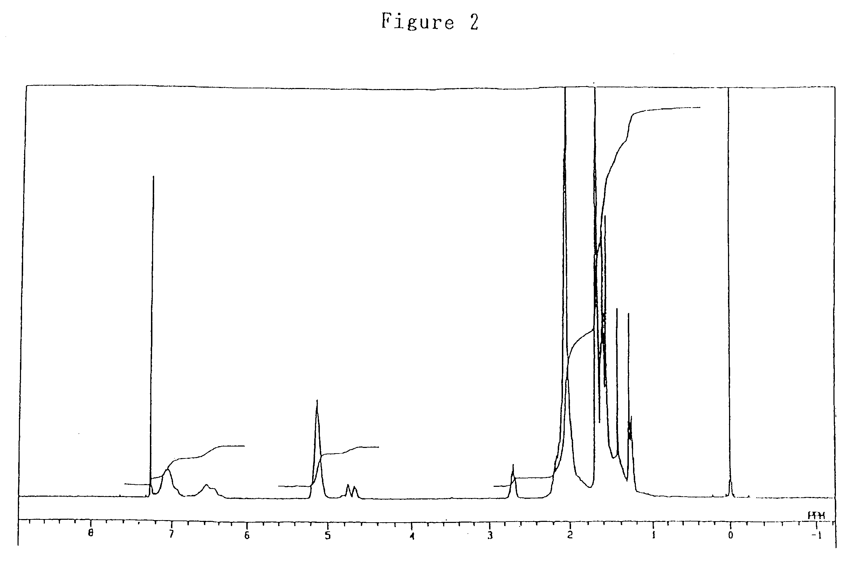

An FT-NMR absorption spectrum chart in relation to the epoxy-modified block copolymer obtained is shown in Figure 2.

It was confirmed by the Figure 1 that there decreased the peaks in 4.8-5.1 ppm and 5.2-5.6 ppm which depend upon a diene component after epoxidation, and then there were observed the peaks in 2.6-2.8 ppm and 2.8-3.0 ppm which depend upon epoxy groups derived from the epoxidation reaction.

[Synthesis Example 6/Preparation of the component (c)an epoxy-modified aromatic vinyl-conjugated diene block copolymer]

A jacketed reaction vessel equipped with a stirrer, a reflux condenser and a thermometer was charged with 300 parts by weight of polystyrene-polyisoprene-polystyrene block copolymer [a trade name of VS-1 manufactured by Kurare, Ltd., which is a copolymer having a polyisoprene block including vinyl groups] and 1500 parts by weight of cyclohexane, followed by being dissolved.

Successively, 222 parts by weight of ethyl acetate solution having 30 % of peracetic acid was continuously added dropwise, followed by epoxidizing while stirring at 40 °C for 3 hours.

The reactants solution was cooled to ordinary temperatures, followed by being taken out of the reaction vessel.

Successively, large amounts of methanol were added to the mixture to precipitate a copolymer, and then the copolymer was filtered and washed by water, followed by being dried to obtain an epoxy-modified aromatic vinyl-conjugated diene block copolymer having an epoxy equivalent of 375.

Epoxy-modified aromatic vinyl-conjugated diene block copolymer obtained was designated as copolymer F.

[Synthesis Example 7/Preparation of the component (c)an epoxy-modified aromatic vinyl-conjugated diene block copolymer which is partially hydrogenated]

A jacketed autoclave equipped with a stirrer, a reflux condenser and a thermometer was charged with 300 parts by weight of polystyrene-polyisoprene-polystyrene block copolymer [a trade name, Kaliflex TR2000 manufactured by Japan Synthetic Rubber,Ltd.] and 3000 parts by weight of cyclohexane, followed by being dissolved.

Successively, there were mixed and added 40 parts by weight of cyclohexane solution of di-p-tollylbis(1-cyclopentadienyl)titanium having the concentration of 5 millimole/liter and 8 parts by weight of n-butyl-lithium solution having the concentration of 5 millimole/liter at 0 °C and hydrogen pressure of 2.0 kg/cm$^2$, followed by allowing to react at hydrogen partial pressure of 2.5 kg/cm$^2$ and the temperature of 60 °C for 30 minutes.

Solvent was removed from a partially hydrogenated-copolymer solution obtained at a reduced pressure. The hydrogenation ratio in the total block of butadiene was 30 %.

There was dissolved 300 parts by weight of the partially hydrogenated copolymer in 1500 parts by weight of cyclohexane.

Successively, 300 parts by weight of ethyl acetate solution having 30 % of peracetic acid was continuously added dropwise, followed by epoxidizing while stirring at 40 °C for 3 hours.

The reactant solution was cooled to ordinary temperatures, followed by being taken out of the autoclave.

Successively, large amounts of methanol were added to the solution to precipitate a copolymer, and then the copolymer was filtered and washed by water, followed by being dried to obtain an epoxy-modified aromatic vinyl-conjugated diene block copolymer having an epoxy equivalent of 275.

Epoxy-modified aromatic vinyl-conjugated diene block copolymer obtained was designated as copolymer G.

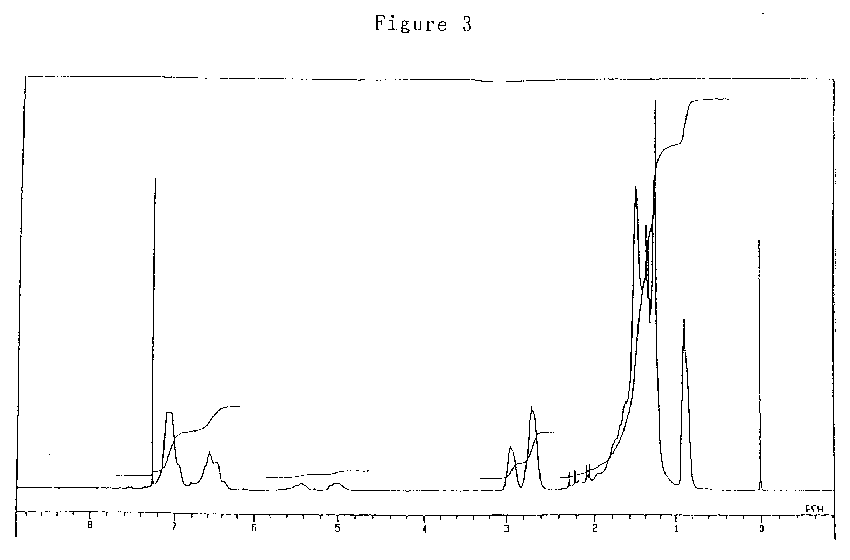

An FT-NMR absorption spectrum chart in relation to the epoxy-modified block copolymer obtained is shown in Figure 3.

It was confirmed by the Figure 1 that there decreased the peaks in 4.8-5.1 ppm and 5.2-5.6 ppm which depend upon a diene component after epoxidation, and then there were observed the peaks in 2.6-2.8 ppm and 2.8-3.0 ppm which depend upon epoxy groups derived from the epoxidation reaction.

[Synthesis Example 8/Preparation of the component (c)an epoxy-modified aromatic vinyl-conjugated diene block copolymer]

A jacketed reaction vessel equipped with a stirrer, a reflux condenser and a thermometer was charged with 300 parts by weight of polystyrene-butadiene block copolymer [a trade name of Toughtek H-1041 manufactured by Asahi Chemical, Ltd.] and 1500 parts by weight of cyclohexane, followed by being dissolved.

Successively, 39 parts by weight of ethyl acetate solution having 30 % of peracetic acid was continuously added dropwise, followed by epoxidizing while stirring at 50 °C for 3 hours.

The reactant solution was cooled to ordinary temperatures, followed by being taken out of the reaction vessel.

Successively, large amounts of methanol were added to the solution to precipitate a copolymer, and then the copolymer was filtered and washed by water, followed by being dried to obtain an epoxy-modified aromatic vinyl-conjugated diene block copolymer having an epoxy equivalent of 5340.

Epoxy-modified copolymer obtained was designated as copolymer H.

Test pieces were prepared from thus-obtained epoxy-modified aromatic vinyl-conjugated diene block copolymers A to H.

It is noted that epoxy equivalent values were measured by titration method using brominated hydrogen acid, and calculated by the following equation.

Epoxy equivalent=10000 x [weight(g) of an epoxy-modified aromatic vinyl-conjugated diene block copolymer]/[titration amount(milliliter) of 0.1 N brominated hydrogen acid x factor of brominated hydrogen acid]

It is noted that Yellow Index values were measured with white plates. coated by a layer having the thickness of 50 microns prepared from toluene solutions containing 30 % of copolymers by drying at 80 °C for 3 minutes.

A color difference meter [SZ-Sigma90 manufactured by Nihon Denshoku Industries, Ltd.] was used for measuring Yellow Index values.

Yellow Index values were measured in drying conditions by air heated at 170 °C for 20 minutes.

Melt viscosity values were measured at 190 °C with a flow tester [CFT 500 manufactured by Shimadzu Seisakusho, Ltd.].

The copolymers A to H were processed for preparing sheets with a thermal roll, respectively, then square-cut sheets having 10 cm x 10 cm were prepared by compression molding, followed by being cut with a dumbbell cutter to obtain test pieces.

Table 1 lists mechanical properties related to the epoxy-modified copolymers A to H obtained in Synthesis Examples 1 to 8.

Table 1

| Synthesis Example | 1 | 2 | 3 | 4 | 5 | 6 | 7 | 8 |
|---|---|---|---|---|---|---|---|---|
| Epoxy-modified aromatic vinyl-conjugated diene block copolymer | | | | | | | | |
| | A | B | C | D | E | F | G | H |
| Tensile strength (Kg/cm$^2$) | 220 | - | 305 | 310 | 200 | 140 | 230 | 180 |
| Elongation at break (%) | 990 | - | 600 | 800 | 1100 | 700 | 950 | 997 |
| Hardness (JIS A) | 85 | - | 99 | 80 | 60 | 66 | 87 | 60 |
| Epoxy equivalent | 470 | 1820 | 695 | 448 | 362 | 375 | 275 | 5340 |
| Yellow Index | 1.6 | - | 0.5 | 1.7 | 1.8 | - | - | - |
| | (11.7) | - | (5.6) | (12.0) | (1.8) | - | - | - |
| Melt viscosity (poise) | 4800 | - | 7000 | - | - | - | - | - |
| | (19200) | - | (10900) | - | - | - | - | - |
| Oil resistance | 16 | - | - | 23 | 7 | - | - | - |
| | (104) | - | - | (226) | (67) | - | - | - |

Oil resistance values were measured according to JIS K6301, which show the weight increase ratio (%) after dipping in a test oil(No.1) at 70 °C for 22 hours.

Of Yellow index, melt viscosity and oil resistance values, those in parenthesis are for corresponding copolymers before epoxidation.

It is clearly shown in Table 1 that the epoxy-modified aromatic vinyl-conjugated diene block copolymer employed in the present invention has a more excellent Yellow index, flow property and oil resistance property than before epoxidation.

[Application Example 1/Preparation of the compatible blend of the present invention and evaluation of its compatibility]

A compatible blend of the present invention was prepared by mixing 60 parts by weight of a polybutylene terephthalate [trade name 1401-X06 manufactured by Toray, Ltd. hereinafter, PBT] and 40 parts by weight of modified polyphenylene ether [trade name Nollyl 731J manufactured by Japan GE Plastics, Ltd., hereinafter, MPPE] with 5 parts by weight of the above-mentioned epoxy-modified aromatic vinyl-conjugated diene block copolymer A with a twin-screw extruder.

The compatible blend was further molded by injection to obtain test pieces. Test piece was exposed to liquified nitrogen and broken to observe dispersed particle size in the broken surface with an electronic microscope for the purpose of evaluating its compatibility.

[Comparative Application Example 1]

Procedures the same as in Application Example 1, except that epoxy-modified aromatic vinyl-conjugated diene block copolymer A was not employed.

[Application Examples 2 to 29/Preparation of the compatible blend of the present invention and evaluation of its compatibility]

Procedures the same in Application Example 1 were repeated, except that the combination of resins and epoxy-modified aromatic vinyl-conjugated diene block copolymer to be mixed were changed.

[Comparative Application Examples 2 to 24]

Procedures the same in Application Example 1 were repeated, except that the combination of resins was changed and aromatic vinyl-conjugated diene block copolymer before epoxidation was employed.

Table 2 shows mechanical properties and compatibility obtained in Application Examples 1 to 29 and Comparative Application Examples 1 to 24.

Table 2

|  | (1) | (2) | (3) | (4) | (5) | (6) |
|---|---|---|---|---|---|---|
| Appl. Ex. 1 | A(5) | MPPE(40)/PBT(60) | 12.3 | 110 | ⟨1 | good |
| Appl. Ex. 2 | C(5) | MPPE(40)/PBT(60) | 10.5 | 112 | ⟨1 | good |
| Appl. Ex. 3 | D(5) | MPPE(40)/PBT(60) | 10.3 | 109 | ⟨1 | good |
| Appl. Ex. 4 | H(5) | MPPE(40)/PBT(60) | 11.5 | 117 | ⟨1 | good |
| R. F. 1 | SBS-E(5 | MPPE(40)/PBT(60) | 10.3 | 119 | ⟨2 | good |
| C. Appl. Ex. 1 | - | MPPE(40)/PBT(60) | 3.2 | 102 | 5-10 | L-Peel |
| C. Appl. Ex. 2 | TR2000(5) | MPPE(40)/PBT(60) | 5.0 | 100 | 5-10 | L-Peel |
| C. Appl. Ex. 3 | TTH1041(10) | MPPE(40)/PBT(60) | 7.0 | 105 | 5-10 | L-Peel |
| Appl. Ex. 5 | B(10) | MPPE(40)/PA-6(60) | 12.5 | 110 | ⟨2 | good |
| Appl. Ex. 6 | D(10) | MPPE(40)/PA-6(60) | 11.3 | 108 | ⟨2 | good |
| Appl. Ex. 7 | H(10) | MPPE(40)/PA-6(60) | 13.2 | 100 | ⟨20 | good |
| R. F. 2 | SBS-E(10) | MPPE(40)/PA-6(60) | 12.2 | 114 | ⟨5 | good |
| C. Appl. Ex. 4 | - | MPPE(40)/PA-6(60) | 3.4 | 100 | ⟨20 | S-Peel |
| C. Appl. Ex. 5 | TR2000(10) | MPPE(40)/PA-6(60) | 4.0 | 98 | 5-10 | S-Peel |
| C. Appl. Ex. 6 | TTH1041(10) | MPPE(40)/PA-6(60) | 4.8 | 101 | 5-10 | S-Peel |
| Appl. Ex. 8 | B(5) | ABS(40)/PBT(60) | 10.1 | 70 | - | good |
| Appl. Ex. 9 | E(5) | ABS(40)/PBT(60) | 9.5 | 69 | - | good |
| Appl. Ex. 10 | H(5) | ABS(40)/PBT(60) | 15.4 | 79 | - | good |
| R. F. 3 | SBS-E(10) | ABS(40)/PBT(60) | 13.7 | 73 | - | good |
| C. Appl. Ex. 7 | - | ABS(40)/PBT(60) | 3.5 | 65 | - | FM |

Table 2-continued

| | [1] | [2] | [3] | [4] | [5] | [6] |
|---|---|---|---|---|---|---|
| C .Appl. Ex. 8 | TTH1041(10) | ABS(40)/PBT(60) | 5.1 | 63 | - | good |
| Appl. Ex. 11 | C(5) | MPPE(40)/MA-PP(60) | 10.6 | 115 | (1 | good |
| Appl. Ex. 12 | H(5) | MPPE(40)/MA-PP(60) | 12.8 | 118 | (1 | good |
| R. F. 4 | SBS-E(10) | MPPE(40)/MA-PP(60) | 10.3 | 119 | - | good |
| C. Appl. Ex. 9 | - | MPPE(40)/MA-PP(60) | 3.6 | 105 | (10 | S-Peel |
| C. Appl. Ex.10 | TTH1041(5) | MPPE(40)/MA-PP(60) | 5.5 | 108 | (1 | good |
| Appl. Ex. 13 | A(10) | ABS(40)/PA(60) | 12.3 | - | - | good |
| Appl. Ex. 14 | D(10) | ABS(40)/PA(60) | 45 | - | - | good |
| Appl. Ex. 15 | E(10) | ABS(40)/PA(60) | 50 | - | - | good |
| R. F. 5 | SBS-E(10) | ABS(40)/PA(60) | 45 | - | - | good |
| C. Appl. Ex. 11 | - | ABS(40)/PA(60) | 4.7 | - | - | S-Peel |
| C. Appl. Ex. 12 | TR2000(10) | ABS(40)/PA(60) | 7.3 | - | - | S-Peel |
| Appl. Ex. 16 | B(10) | MPPE(40)/PC(60) | 59 | - | - | good |
| Appl. Ex. 17 | C(10) | MPPE(40)/PC(60) | 45 | - | - | good |
| Appl. Ex. 18 | E(10) | MPPE(40)/PC(60) | 56 | - | - | good |
| R. F. 6 | SBS-E(10) | MPPE(40)/PC(60) | 51 | - | - | good |
| C. Appl. Ex.13 | - | MPPE(40)/PC(60) | 4.8 | - | - | FM |
| C. Appl. Ex.14 | TR2000(10) | MPPE(40)/PC(60) | 20 | - | - | FM |
| Appl. Ex. 19 | A(10) | ABS(40)/PET(60) | 9.3 | - | - | good |
| Appl. Ex. 20 | C(10) | ABS(40)/PET(60) | 7.1 | - | - | good |
| Appl. Ex. 21 | E(10) | ABS(40)/PET(60) | 9.0 | - | - | good |
| C. Appl. Ex.15 | - | ABS(40)/PET(60) | 3.2 | - | - | FR |
| C. Appl. Ex.16 | TR2000 | ABS(40)/PET(60) | 6.3 | - | - | FR |

Table 2-continued

| | [1] | [2] | [3] | [4] | [5] | [6] |
|---|---|---|---|---|---|---|
| Appl. Ex. 22 | C(10) | ABS(50)/PC(50) | 58 | - | - | - |
| Appl. Ex. 23 | E(10) | ABS(50)/PC(50) | 63 | - | - | - |
| C. Appl. Ex.17 | - | ABS(50)/PC(50) | 35 | - | - | - |
| C. Appl. Ex.18 | TR2400(10) | ABS(50)/PC(50) | 40 | - | - | - |
| Appl. Ex. 24 | A(10) | MPPE(40)/PET(60) | 10.6 | - | - | good |
| Appl. Ex. 25 | E(10) | MPPE(40)/PET(60) | 11.2 | - | - | good |
| C. Appl. Ex.19 | - | MPPE(40)/PET(60) | 1.8 | - | - | S-Peel |
| C. Appl. Ex.20 | TR2000(10) | MPPE(40)/PET(60) | 3.0 | - | - | S-Peel |
| Appl. Ex. 26 | A(10) | PA(20)/PBT(80) | 6.0 | - | - | good |
| Appl. Ex. 27 | E(10) | PA(20)/PBT(80) | 7.3 | - | - | good |
| C. Appl. Ex.21 | - | PA(20)/PBT(80) | 1.5 | - | - | S-Peel |
| C. Appl. Ex.22 | TR2000(10) | PA(20)/PBT(80) | 3.0 | - | - | S-Peel |
| Appl. Ex. 28 | B(10) | PA(20)/PC(80) | 10.7 | - | - | good |
| Appl. Ex. 29 | E(10) | PA(20)/PC(80) | 11.6 | - | - | good |
| C. Appl. Ex.23 | - | PA(20)/PC(80) | 1.5 | - | - | S-Peel |
| C. Appl. Ex.24 | TR2000(10) | PA(20)/PC(80) | 3.0 | - | - | S-Peel |

In Table 2, [1], [2], [3] [4], [5] and [6] correspond to epoxy-modified aromatic vinyl-conjugated diene block copolymer employed and mixing part by weight, mixed resins(a)/(b) or (b)/(b) and mixing ratio by weight thereof, Izod impact strength value (kg-cm/cm, in a notched test piece having the thickness of 3.2 mm based on ASTM D256), a heat distortion temperature (°C, based on ASTM D648), dispersed particle size (micron) and appearance of the broken surface, respectively.

Appl. Ex. and C. Appl. Ex. show Application Examples and Comparative Application Examples, respectively. R.F. 1 to R.F. 6 are corresponding data described in the Japanese Patent Unexamined Publication (Kokai) No. 100809/1992, and SBS-E is a styrene-butadiene-styrene block copolymer having epoxy groups at terminals.

TR2000 and TTH 1041 are aromatic-diene block copolymer corresponding to copolymers B and F before epoxidation, respectively.

In outer appearance (6), L-Peel , S-Peel, FM and FR show "layer-like peeling", "surface peeling", "presence of flow mark" and "frosting".

Abbreviations of mixed resins PBT, MPPE, PA-6, ABS, MA-PP, PC and PET correspond to polybutylene terephthalate, modified polyphenylene ether, polyamide(Nylon 6), acrylonitrile-butadiene-styrene copolymer, maleic acid-modified polypropylene, polycarbonate and polyethylene terephthalate, respectively.

PBT:      Trade name of 1401-X06 manufactured by Toray, Ltd.
MPPE:   Trade name of Nollyl 731J manufactured by Japan GE Plastics, Ltd.
PA-6:     Trade name of UBE Nylon 1013 manufactured by Ube Kosan, Ltd.
ABS:     Trade name of Cevian 510SF manufactured by Daicel Chemical Industries, Ltd.
MA-PP:  Trade name of Admer QB010 manufactured by Mitsui Petrochemical Industries, Ltd.

PC:      Trade name of Panlite L1225 manufactured by Teijin Chemical Industries, Ltd.
PET:     Trade name of Tetolon TR4550RH manufactured by Teijin Chemical, Ltd.

[Application Examples 30 to 45/Preparation of the thermoplastic resin composition of the present invention and evaluation of its properties] and
[Comparative Application Examples 25 to 36]

A twin-screw extruder was used for mixing to obtain a thermoplastic resin composition. Tests pieces were prepared from the thermoplastic resin composition with an injection machine.

Thermoplastic resin, epoxy-modified or non-modified aromatic vinyl-conjugated diene block copolymer, mixing ratio thereof and results are shown in Table 3.

Table 3

|  | [1] | [2] | [3] | [4] |
|---|---|---|---|---|
| Appl. Ex. 30 | A(10) | PBT(90) | 5.9 | 90 |
| Appl. Ex. 31 | A(15) | PBT(85) | 8.9 | 90 |
| Appl. Ex. 32 | A(20) | PBT(80) | 18.7 | 89 |
| Appl. Ex. 33 | C(10) | PBT(90) | 4.2 | 92 |
| Appl. Ex. 34 | D(10) | PBT(90) | 5.3 | 89 |
| Appl. Ex. 35 | E(10) | PBT(90) | 5.5 | 89 |
| Appl. Ex. 36 | H(10) | PBT(90) | 6.0 | 95 |
| C. Appl. Ex. 25 | - | PBT(100) | 2.7 | 102 |
| C. Appl. Ex. 26 | N.A(10) | PBT(90) | 3.8 | 87 |
| C. Appl. Ex. 27 | N.A(15) | PBT(85) | 3.8 | 86 |
| C. Appl. Ex. 28 | N.A(20) | PBT(8) | 3.6 | 86 |
| Appl. Ex. 37 | A(10) | PA6 (90) | 10.3 | 80 |
| Appl. Ex. 38 | C(10) | PA6(90) | 8.9 | 86 |
| Appl. Ex. 39 | H(10) | PA6(90) | 10.1 | 83 |
| C. Appl. Ex. 29 | - | PA6(100) | 3.3 | 90 |
| C. Appl. Ex. 30 | N.H(10) | PA6(90) | 7.8 | 70 |
| Appl. Ex. 40 | A(10) | PS(90) | 4.1 | 80 |
| C. Appl. Ex. 31 | - | PS(100) | 2.0 | 80 |
| C. Appl. Ex. 32 | N.A(10) | PS(90) | 2.7 | 80 |
| Appl. Ex. 41 | A(10) | PC(90) | 58.3 | 133 |
| Appl. Ex. 42 | H(10) | PC(90) | 59.5 | 134 |
| C. Appl. Ex. 33 | - | PC(100) | 14.8 | 136 |
| Appl. Ex. 43 | A(10) | POM(90) | 8.9 | 102 |
| Appl. Ex. 44 | H(10) | POM(90) | 10.1 | 104 |
| C. Appl. Ex. 34 | - | POM100) | 6.7 | 103 |
| Appl. Ex. 45 | H(10) | MPPE(90) | 30.0 | - |
| C. Appl. Ex. 35 | N.H(10) | MPPE(90) | 24.1 | - |
| C. Appl. Ex. 36 | - | MPPE(90) | 7.0 | - |

In Table 3. [1], [2], [3] and [4] correspond to epoxy-modified or non-modified aromatic vinyl-conjugated diene block copolymer (e.g., N.A. or N.H. is the corresponding copolymer before epoxidation) employed and mixing parts by weight, thermoplastic resin and mixing ratio by weight thereof, Izod impact strength value (kg-cm/cm, in a notched test piece having the thickness of 3.2 mm based on ASTM D256) and a heat distortion temperature (°C based on ASTM D648), respectively.

Appl. Ex. and C. Appl. Ex. show Application Examples and Comparative Application Examples, respectively.

Abbreviations of mixed resins PBT, PA6 (Nylon 6), PS, PC, POM and MPPE correspond to polybutylene terephthalate resin, polyamide resin, polystyrene resin, polycarbonate resin, polyoxymethylene resin and modified polyphenylene ether resin, respectively.

PBT: Trade name of Duranex 400FP manufactured by Polyplastics, Ltd.
PA6: Trade name of UBE-Nylon 1013B manufactured by Ube Kosan, Ltd.
PS: Trade name of Stylon 691 manufactured by Asahi Chemical, Ltd.
PC: Trade name of Panlite L1225 manufactured by Teijin Chemi cal, Ltd.
POM: Trade name of Duracon manufactured by Polyplastics, Ltd.
MPPE: Trade name of Ziron 500H manufactured by Asahi Dow, Ltd.

[Application Examples 46 and 47/Preparation of the thermoplastic resin composition of the present invention and evaluation of its heat resistance] and [Comparative Application Examples 37 and 38]

A Plastomill adjusted to the temperature of 200 °C and revolution velocity of 200 rpm was charged with epoxy-modified or non-modified aromatic vinyl-conjugated diene block copolymer and thermoplastic resin according to the mixing ratio as shown in Table 4, followed by being mixed for approximately 10 minutes to obtain a mixture. The mixture was taken out, and sheets were prepared from the mixture with a thermal roll.

Plates having 10 square cm were prepared from the sheets by compression molding, then test pieces for measurements were cut out of the plates with a dumb-bell cutter. It Is noted that mechanical properties were measured based on JIS K6301.

Results are shown in Table 4.

Table 4

| | Application Example | | Comparative Application Example | |
|---|---|---|---|---|
| | 46 | 47 | 37 | 38 |
| Block Copolymer | - | - | TR2000(60) | TR2000(70) |
| EM Block Copolymer | A(60) | A(70) | - | - |
| Thermoplastic resin | PA6(40) | PBT(30) | PA6(40) | PBT(30) |
| Tensile strength (kg/cm$^2$) | 280 | 300 | 270 | 300 |
| Elongation at break (%) | 470 | 450 | 400 | 400 |
| Permanent elongation (%) at 100% elongation | 30 | 25 | 25 | 20 |
| Hardness (JIS A) | 90 | 100 | 88 | 100 |
| Retention ratio (%) of Tensile strength at 80 °C | 70 | 70 | 40 | 40 |

In Table 4, EM Block Copolymer A is epoxy-modified aromatic vinyl-conjugated diene block copolymer obtained in Synthesis Example 1, TR2000 is block copolymer before epoxidation in Synthesis Example 1, and thermoplastic resins PA6 and PBT are nylon 6 resin and polybutylene terephthalate, respectively.

Table 4 clearly shows that the retention ratio of tensile strength at 80 °C in Application Examples 46 and 47 is more excellent than the retention ratio in Comparative Application Examples 37 and 38.

[Application Examples 48 and 51/Preparation of the polyalkylene terephthalate composition of the present invention and evaluation of its properties] and [Comparative Application Examples 39 to 44]

Polybutylene terephthalate resin [a trade name of Duranex 400FP manufactured by Polyplastics, Ltd., referred to as PBT], carboxylic acids and epoxy-modified aromatic vinyl-conjugated diene block copolymers were mixed by dry blending in the mixing ratio as shown in Table 5 to obtain polybutyleneterephthalate composition of the present invention.

The polybutylene terephthalate compositions obtained were melted and extruded with a screw extruder adjusted to 250 °C. to obtain pellets.

Successively, pellets obtained were molded with an injection machine adjusted to 250 °C in which a molding die temperature was adjusted to 80 °C to obtain No. 1 dumb-bell test pieces and pieces for Izod impact test based on ASTM D256.

Broken test pieces after tests were crushed with a cutter mill to repeatedly obtain pellets. Successively, pellets obtained were again molded with an injection machine under the same conditions.

Tensile strength/extension tests [based on ASTM D638] and Izod impact strength tests [based oh ASTM D256] were carried out related to the once-molded test pieces, twice-molded test pieces and thrice-molded test pieces.

For reference, a mixture of PBT with a carboxylic acid alone and a mixture of PBT with the epoxy-modified aromatic vinyl-conjugated diene block copolymer alone were also prepared and molded to obtain test pieces.

Epoxy-modified aromatic vinyl-conjugated diene block copolymer, mixing amounts thereof and/or carboxylic acid and results obtained are shown in Tables 5 and 6.

Table 5

|  | [1] | [2] | [3] | [4] | [5] |
|---|---|---|---|---|---|
| Appl. Ex. 48 | H(10) | benzoic acid (0.1) | 540 | 538 | 535 |
| Appl. Ex. 49 | G(10) | benzoic acid (0.1) | 530 | 530 | 527 |
| Appl. Ex. 50 | G(10) | p-toluic acid (0.1) | 525 | 523 | 520 |
| Appl. Ex. 51 | G(10) | sebacic acid (0.05) | 525 | 522 | 519 |
| C. Appl. Ex. 39 | - | - | 560 | 550 | 521 |
| C. Appl. Ex. 40 | H(10) | - | 540 | 500 | 490 |
| C. Appl. Ex. 41 | - | benzoic acid (0.1) | 565 | 540 | 520 |
| C. Appl. Ex. 42 | - | p-toluic acid(0.1) | 565 | 543 | 513 |
| C. Appl. Ex. 43 | - | sebacic acid(0.05) | 565 | 542 | 510 |
| C. Appl. Ex. 44 | X(10) | - | 505 | 490 | 480 |

Table 6

|  | [1] | [2] | [3] | [4] | [5] | [6] |
|---|---|---|---|---|---|---|
| Appl. Ex. 48 | 50 | 47 | 45 | 7.6 | 7.4 | 7.2 |
| Appl. Ex. 49 | 55 | 53 | 52 | 9.9 | 9.7 | 9.5 |
| Appl. Ex. 50 | 60 | 59 | 57 | 10 | 10 | 9.8 |
| Appl. Ex. 51 | 58 | 56 | 54 | 10 | 9.9 | 9.7 |
| C. Appl. Ex. 39 | 32 | 30 | 25 | 2.8 | 2.5 | 2.0 |
| C. Appl. Ex. 40 | 45 | 40 | 30 | 5.9 | 4.8 | 4.1 |
| C. Appl. Ex. 41 | 30 | 21 | 13 | 2.7 | 2.5 | 2.0 |
| C. Appl. Ex. 42 | 29 | 15 | 12 | 2.7 | 2.4 | 1.9 |
| C. Appl. Ex. 43 | 29 | 14 | 9 | 2.6 | 2.4 | 1.9 |
| C. Appl. Ex. 44 | 40 | 35 | 27 | 5.7 | 4.5 | 4.0 |

In Table 5, [1], [2], [3], [4] and [5] show epoxy-modified aromatic vinyl-conjugated diene block copolymers employed and mixing parts by weight thereof, carboxylic acid and mixing parts by weight thereof, tensile strength value in once-molded test pieces, tensile strength value in twice-molded test pieces and tensile strength value in thrice-molded pieces, respectively.

In Table 6, [1], [2], [3], [4], [5] and [6] show tensile elongation value in once-molded test pieces, tensile strength value in twice-molded test pieces, Izod impact test value in once-molded test pieces and tensile strength value in twice-molded test pieces, respectively.

In Tables 5 and 6, Appl. Ex. and C. Appl. Ex. show Application Examples and Comparative Application Examples, respectively.

In Comparative Application Example 44 of Table 5, X in [1] is an ethylene-glycidyl methacrylate copolymer having a trade name of Bond First 2C manufactured by Sumitomo Chemical, Ltd.

Tables 5 and 6 clearly show that the polyalkylene terephthalate composition of the present invention has a remarkable resistance to a heat degradation in mechanical properties even after repeatedly molding and improved impact strength.

[Application Examples 52 to 57/Preparation of the polycarbonate resin composition of the present invention and evaluation of its properties] and [Comparative Application Examples 45 to 49]

Aromatic polycarbonate resin was melted and mixed with a carboxylic acid, etc. and epoxy-modified aromatic vinyl-conjugated diene block copolymer in mixing parts by weight as shown in Table 7 with a twin-screw extruder having a diameter of 50 mm to obtain pellets.

The twin screw extruder was operated at 270 °C and revolution velocity of 290 rpm. Pellets were molded with an injection machine adjusted to 270 °C and at a molding die temperature of 60 °C to obtain test pieces.

Test pieces were molded and mechanical properties were measured according to the following standard:

Izod impact strength with notched test pieces : ASTM D256
Tensile strength and elongation : ASTM D638
Flexural strength and flexural elasticity : ASTM D790

Surface glossiness in test pieces [a square plate having 50 mmL x 50 mmW x 3 mmT] was measured with an angle-adjustable gloss meter [manufactured by Nihon Densyoku, Ltd.].

Furthermore, the color difference index [delta E] in grey-colored test pieces [a square plate having 50 mmL x 50 mmW x 3 mmT] was measured as an index of weatherability with a color difference meter [SZ-290 manufactured by Nihon Densyoku, Ltd.], before and after exposing to a xenon arc lamp having the irradiation wave length of 340 nm and the irradiation energy of 0.39 $W/m^2$. The weatherability tests were carried out at conditions of the black panel temperature of 63 °C and humidity of 50 % with C135 tester manufactured by Atlas, Ltd.

Components employed in the Application Examples and Comparative Application Examples, mixing parts by weight thereof and results are shown in Table 7.

Table 7

| | Application Examples | | | | | | Comparative Application Examples | | | | |
|---|---|---|---|---|---|---|---|---|---|---|---|
| | 52 | 53 | 54 | 55 | 56 | 57 | 45 | 46 | 47 | 48 | 49 |
| Components of Polycarbonate resin composition (parts by weight) | | | | | | | | | | | |
| PC | 90 | 90 | 90 | 90 | 90 | 90 | 100 | 90 | 90 | 80 | 80 |
| ABS | | | | | | | | | | 10 | 10 |
| E/H | 10 | 10 | 10 | | | | | 10 | | 10 | |
| E/G | | | | 10 | 10 | 10 | | | 10 | | 10 |
| C/A | 0.1 | | | | 0.1 | | | | | | |
| P/A | | 0.1 | | | | 0.1 | | | | | |
| M/A | | | 0.1 | 0.1 | | | | | | | |
| Mechanical and physical properties 60° glossiness (%) | 25 | 23 | 22 | 22 | 21 | 20 | 96 | 78 | 71 | 20 | 21 |
| Notched Izod impact strength(kg-cm/cm) | 61 | 59 | 62 | 67 | 68 | 63 | 15 | 60 | 66 | 61 | 65 |

Table 7 (continued)

| | Application Examples | | | | | | Comparative Application Examples | | | | |
|---|---|---|---|---|---|---|---|---|---|---|---|
| | 52 | 53 | 54 | 55 | 56 | 57 | 45 | 46 | 47 | 48 | 49 |
| Components of Polycarbonate resin composition (parts by weight) | | | | | | | | | | | |
| Tensile strength (kg/cm$^2$) | 631 | 640 | 642 | 651 | 648 | 650 | 715 | 610 | 603 | 615 | 610 |
| Tensile elongation (%) | 110 | 105 | 105 | 120 | 115 | 120 | 118 | 105 | 110 | 100 | 105 |
| Flexural strength (kg/cm$^2$) | 708 | 710 | 712 | 705 | 707 | 704 | 775 | 697 | 681 | 680 | 673 |
| Flexural elasticity (kg/cm$^2$ x 10$^2$) | 181 | 185 | 184 | 175 | 170 | 177 | 202 | 170 | 165 | 169 | 168 |
| Color difference value (delta E) | 3.9 | 3.8 | 3.9 | 3.8 | 3.9 | 3.8 | 3.2 | 3.8 | 3.9 | 7.5 | 7.4 |

Abbreviations of components in Table 7, PC, ABS, E/H, E/G, C/A, P/A and M/A show polycarbonate resin, acrylonitrile-butadiene-styrene copolymer, epoxy-modified aromatic vinyl-conjugated diene block copolymer H, epoxy-modified aromatic vinyl-conjugated diene block copolymer G, citric acid, phosphorous acid and maleic anhydride, respectively.

Table 7 clearly shows that the polycarbonate resin composition of the present invention has an excellent frosting property without any loss of mechanical properties and weatherability.

[Application Examples 58 to 64/Preparation of the pressure-sensitive adhesive composition of the present invention and evaluation of its properties] and [Comparative Application Examples 50 to 55]

The pressure-sensitive adhesive compositions were prepared in the mixing ratio shown in Table 8.

Table 8

| Block copolymer | 100 parts by weight |
|---|---|
| Resin having tackiness | 100 parts by weight |
| Softener | 60 parts by weight |
| Anti-oxidant | 3 parts by weight |

Resin having tackiness is alicyclic hydrocarbon resin which is Alkon M-90 manufactured by Arakawa Chemicals, Ltd.

Softener is naphthen-based process oil which is Daiana process oil MM-280 manufactured by Idemitsu Kosan, Ltd.

Antioxidant is naphthen-based antioxidant which is Noklack NS-60 manufactured by Ohuchi Shinko Chemicals, Ltd.

Pressure-sensitive property values were measured at room temperature by a Rolling ball tack method with slope angle of 30°.

Results are shown in Table 9.

Table 9

| | Application Examples | | | | Comparative Application Examples | | | |
|---|---|---|---|---|---|---|---|---|
| | 58 | 59 | 60 | 61 | 50 | 51 | 52 | 53 |
| Block copolymer | A | C | D | E | A' | C' | D' | E' |
| Rolling ball tack (ball No.) | 25 | 34 | 28 | 30 | 14 | 16 | 18 | 17 |
| Cohesive strength (g/cm. room temperature, based on JIS Z1522) | 850 | 700 | 800 | 750 | 700 | 650 | 500 | 390 |
| Holding power (mm, room temperature, based on JIS Z1524) | 1.0 | 2.5 | 1.2 | 1.0 | 4.0 | 3.0 | 2.5 | 2.0 |

Table 9 clearly shows that pressure-sensitive adhesive compositions having epoxy-modified aromatic vinyl-conjugated diene block copolymer exhibit more excellent properties.

Pressure-sensitive adhesive compositions were prepared using 100 parts by weight of epoxy-modified block copolymer A and parts by weight of the resin having tackiness as shown in Table 10.

The same softener and antioxidant as shown in Table 8 were employed in amounts of 60 parts by weight and 3 parts by weight, respectively. Results are shown in Table 10.

Table 10

|  | Application Examples | | | Comparative Application Examples | |
|---|---|---|---|---|---|
|  | 62 | 63 | 64 | 54 | 55 |
| Amount of resin having tackiness (parts by weight) | 60 | 100 | 140 | 10 | 250 |
| Rolling ball tack (ball No.) | 25 | 35 | 24 | 10 | 5 |
| Cohesive strength (g/cm, room temperature, based on JIS Z1522) | 700 | 750 | 850 | 250 | 300 |
| Holding power (mm, room temperature, based on JIS Z1524) | 2.0 | 1.0 | 2.0 | (1) | (2) |

Resin having tackiness is polyterpene-based resin which is YS Resin A-800 manufactured by Yasuhara Oils & Fats, Ltd.

In holding power in Table 10, (1) and (2) mean "dropped after 5 minutes" and "dropped after 10 minutes", respectively.

[Application Examples 65 to 68/Preparation of the vinyl chloride-based resin composition of the present invention and evaluation of its properties] and [Comparative Application Examples 56 to 57]

Vinyl chloride-based resin compositions were prepared in the mixing ratio shown in Table 11.

Table 11

| Vinyl chloride resin | 100 parts by weight |
|---|---|
| Epoxidized block copolymer | 5 parts by weight |
| Stearyl alcohol | 0.5 parts by weight |
| Polyethylene wax | 0.3 parts by weight |
| Barium perchlorate | 0.1 parts by weight |

Vinyl chloride resin is Geon 103 EP manufactured by Nihon Geon, Ltd.

Vinyl chloride-based resin compositions were kneaded at 190 °C in a roll mixer to prepare test samples, and samples were placed in a Geer's oven maintained at 190 °C to measure thermal stability thereof.

The thermal stability was evaluated by period of time until considerably coloring. Results are shown in Table 12.

Table 12

|  | Application Examples | | | | Comparative Application Examples | |
|---|---|---|---|---|---|---|
|  | 65 | 66 | 67 | 68 | 56 | 57 |
| Epoxidized block copolymer | A | C | D | E | - | (ESO) |
| Thermal stability (minute) | 65 | 60 | 60 | 60 | 15 | 45 |

Table 12 (continued)

|  | Application Examples | | | | Comparative Application Examples | |
|---|---|---|---|---|---|---|
|  | 65 | 66 | 67 | 68 | 56 | 57 |
| Softening point (°C) | 70 | 72 | 70 | 69 | 70 | 65 |

In the Comparative Application Example 57, (ESO) means epoxidized soybean oil employed in place of the epoxidized block copolymers.

Table 12 clearly shows that the vinyl chloride-based resin compositions having epoxy-modified aromatic vinyl-conjugated diene block copolymer exhibit a more excellent thermal property. [Application Examples 69 to 72/Preparation of the vinyl chloride-based resin composition of the present invention and evaluation of its properties] and [Comparative Application Example 58]

Vinyl chloride-based resin compositions were prepared in the mixing ratio shown in Table 13.

Table 13

| Vinyl chloride resin | 100 parts by weight |
|---|---|
| Epoxidized block copolymer | 10 parts by weight |
| Oxidized polyethylene wax | 0.5 parts by weight |
| Montanic acid wax | 0.3 parts by weight |
| Barium perchlorate | 0.1 parts by weight |

Vinyl chloride resin is Geon 103 EP manufactured by Nihon Geon, Ltd.

Compositions were compressed at 190 °C and 100 kg/cm$^2$ for 10 minutes in a compression molding press to prepare test samples for measuring notched Izod impact based on JIS K-7110.

Results are shown in Table 14.

Table 14

|  | Application Examples | | | | Comparative Application Examples |
|---|---|---|---|---|---|
|  | 69 | 70 | 71 | 72 | 58 |
| Epoxidized block copolymer | A | C | D | E | (MBS) |
| Thermal stability (minute) | 65 | 60 | 60 | 60 | 15 |
| Softening point (°C) | 69 | 71 | 69 | 68 | 71 |
| Izod impact strength (kg-cm/cm) | 4.5 | 4.2 | 4.0 | 4.3 | 3.0 |

In the Comparative Application Example 58, (MBS) means methyl-methacrylate-butadiene-styrene copolymer employed in place of epoxidized block copolymers.

Table 14 clearly shows that vinyl chloride-based resin compositions having epoxy-modified aromatic vinyl-conjugated diene block copolymer exhibit more excellent thermal properties and more excellent Izod impact strength.

[Application Examples 73 to 75/Preparation of the asphalt composition of the present invention and evaluation of its properties] and [Comparative Application Examples 59 to 61]

75 g of epoxy-modified aromatic vinyl-conjugated diene block copolymer or block copolymers before epoxidation and 425 g of a straight asphalt were mixed at 180 °C for 90 minutes to obtain asphalt compositions.

Results are shown in Table 15.

28

Table 15

| | Application Examples | | | Comparative Application Examples | | |
|---|---|---|---|---|---|---|
| | 73 | 74 | 75 | 59 | 60 | 61 |
| Epoxidized block copolymer | A | D | E | A' | D' | E' |
| Tensile strength (kgf/cm$^2$) | 23 | 25 | 18 | 19 | 20 | 17 |
| Elongation at break (%) | >1100 | 1000 | >1100 | >1100 | 995 | >1100 |
| Softening point (°C) | 115 | 112 | 104 | 118 | 115 | 108 |
| Low-temperature property (-30 °C) | good | good | good | X | X | XX |
| Melt viscosity (cp/180 °C) | 6100 | 5000 | 4800 | 12000 | 13000 | 9000 |
| Storage stability (%) | <20 | <20 | <20 | 20-50 | 20-50 | >50 |
| Penetration (0.1 mm) | 55 | 50 | 57 | 57 | 52 | 60 |

In Comparative Application Examples, block copolymers A' , D' and E' correspond to A, D and E before epoxidation, respectively.

Furthermore, in Storage stability data, X and XX mean "slightly good" and "bad", respectively.

Properties were measured based on methods as follows:

(1) Tensile properties:
JIS #3 dumb-bell samples 2 mm thick compressed at 180 °C, based on JIS K6301
(2) Elongation, Penetration and Softening point:
Measured based on JIS K2207
(3) Low-temperature property:
Samples 2 mm thick, 20 mm wide and 100 mm long compressed at 180 °C were placed in methanol cooled by dipped dry ice for 15 minutes, and then bent while splinting a metal rod having the diameter of 15 mm to observe the presence or absence of cracks.
In the low-temperature property data, "good", "X" and "XX" mean "absence of cracks", "slight amounts of cracks" and "completely cracked", respectively.
(4) Melt viscosity:
Measured at a load of 100 kg with a flow tester manufactured by Shimadzu Seisakusho.
(5) Storage stability:
Asphalt compositions were agitated at 160 °C for two days to measure declining ratio versus initial melt viscosity values.

Table 16 clearly shows that asphalt compositions having epoxy-modified aromatic vinyl-conjugated diene block copolymer exhibit more excellent flow properties and more excellent storage stability.

The asphalt composition of the present invention can be preferably used as a vibration-damping material, for example, for an article made by steel plates, and the like.

[Application Examples 76 to 82/Measurements of vibration-damping property related to the asphalt composition of the present invention] and [Comparative Application Examples 62 to 65]

Asphalt compositions in which block copolymers A, D and E were mixed with a straight asphalt having a penetration degree of 80-100 in the amounts as shown in Table 17 were used for measurement of a loss compliance coefficient which corresponds to a vibration-damping property.

It is noted that the loss compliance coefficient was measured by a resonance method in which there were used steel plate samples 1 mm thick coated by asphalt compositions.

Vibration was added to the steel plate samples by a vibration generator, then the loss compliance was measured at frequency of 500 Hz and temperatures of 20 °C and 50 °C.

Results are shown in Table 16.

Table 16

| | Application Examples | | | | | | | Comparative Application Examples | | | |
|---|---|---|---|---|---|---|---|---|---|---|---|
| | 76 | 77 | 78 | 79 | 80 | 81 | 82 | 62 | 63 | 64 | 65 |
| Straight asphalt (parts by weight) | 80 | 80 | 80 | 20 | 90 | 90 | 90 | 80 | 80 | 80 | 100 |
| Block copolymer (parts by weight) | A | D | E | A | A | A | A | A' | D' | E' | - |
| | 20 | 20 | 20 | 80 | 10 | 10 | 10 | 20 | 20 | 20 | - |
| Resin having tackiness (parts by weight) | - | - | - | - | 10 | 10 | 10 | - | - | - | - |
| Mica (parts by weight) | - | - | - | - | 30 | - | 30 | - | - | - | - |
| Ferite (parts by weight) | - | - | - | - | - | 100 | 100 | - | - | - | - |
| Vibration-damping property | | | | | | | | | | | |
| LCC (20 °C) | 49 | 51 | 54 | 51 | 52 | 50 | 53 | 30 | 32 | 33 | 29 |
| LCC (50 °C) | 19 | 20 | 21 | 19 | 24 | 23 | 25 | 7 | 8 | 8 | 7 |

In the Table, LCC is the loss compliance coefficient (x10$^{-3}$).

In the Comparative Application Examples, block copolymers A', D'and E' correspond to A, D and E before epoxidation, respectively.

Resin having tackiness is alicyclic petroleum resin (Alkon M100) manufactured by Arakawa Chemicals, Ltd.

[Application Examples 83 to 87/Preparation of the epoxy resin composition of the present invention and evaluation of its properties] and [Comparative Application Examples 62 to 68]

20 parts by weight of epoxy-modified aromatic vinyl-conjugated diene block copolymers in Synthesis Examples and 100 parts by weight of epi-bis epoxy resin [epoxy equivalent of 450 to 500, Epikote 1001 manufactured by Yuka Shell, Ltd.] were sufficiently kneaded with a laboratory-sized plastomill [manufactured by Toyo Seiki, Ltd.] to obtain an epoxy resin admixture.

The resin admixture was mixed with dicyandiamide and benzyl dimethyl amine in a open roll mixer maintained at 60 °C for 10 minutes to obtain an epoxy resin composition.

Dicyandiamide was employed in an equivalent amount to total epoxy groups included in epoxy-modified aromatic vinyl-conjugated diene block copolymers and epi-bis epoxy resin. Benzyl dimethylamine was employed in 7% of dicyandiamide.

The epoxy resin composition obtained was compressed while preheated and sandwiched between two Teflon sheets in a thermal press maintained at 100 °C for 5 minutes, then compressed for 2 minutes at 50 kgf/cm$^2$ to obtain a sheet not cured and 0.2 mm thick.

The sheet was further compressed at 20 kgf/cm$^2$ and 190 °C for 15 minutes while sandwiched between two aluminum plates which were cleaned by acetone to obtain a sheet 0.1 mm thick.

Samples 25 mm wide were prepared from the sheet.

90° Peel strength was measured at 230 °C and 100 °C in the elongation velocity of 200 mm/minute. Results are shown in Table 17.

Table 17

| | Application Examples | | | | | Comparative Application Examples | | | |
|---|---|---|---|---|---|---|---|---|---|
| | 83 | 84 | 85 | 86 | 87 | 62 | 63 | 64 | 65 |
| Block copolymer | A | C | D | E | G | A' | C' | E' | - |
| Tensile strength (kgf/cm$^2$) | | | | | | | | | |
| 23 °C | 220 | 230 | 210 | 205 | 225 | 110 | 95 | 150 | 175 |
| 100 °C | 50 | 60 | 55 | 45 | 52 | 20 | 18 | 20 | 40 |
| 90° Peel strength (kgf/25mm) | | | | | | | | | |
| 23 °C | 8.5 | 8.4 | 8.3 | 8.4 | 8.5 | 2.8 | 2.0 | 3.9 | 2.3 |
| 100 °C | 6.0 | 6.5 | 6.0 | 5.8 | 6.7 | 1.3 | 1.3 | 3.4 | 4.1 |

In the Comparative Application Examples 62 to 64, A', C' and E' correspond to block copolymers before epoxidation, respectively.

[Application Examples 88 to 89/Preparation of the rubber-like composition of the present invention and evaluation of its properties] and [Comparative Application Examples 66 to 67]

Epoxy-modified block copolymer or no-modified block copolymer, PBT or PA6 as a thermoplastic resin and EPDM as a rubber-like resin were mixed in a laboratory Plastomill maintained at the temperature of 200 °C and at 80 rpm for ten minutes to obtain a rubber-like composition according to the mixing ratio as shown in Table 18.

The rubber-like composition was heated in a thermal roll to prepare a sheet, and then the sheet was compressed with a press to prepare a square-cut sample having the side length of 10 cm. The square-cut samples were prepared with a dumbbell cutter to obtain samples for measurements.

It is noted that the evaluation tests were carried out according to JIS K6301. Results are also shown in Table 18.

Table 18

| | Application Examples | | Comparative Application Examples | |
|---|---|---|---|---|
| | 88 | 89 | 66 | 67 |
| Block copolymer | D | D | D' | D' |
| (part by weight) | (5) | (5) | (5) | (5) |
| Thermoplastic resin | PBT | PA6 | PBT | PA6 |
| (part by weight) | (50) | (50) | (50) | (50) |
| Rubber-like polymer | EPDM | EPDM | EPDM | EPDM |
| (part by weight) | (45) | (45) | (45) | (45) |
| Tensile strength (kgf/cm$^2$) | 180 | 170 | 185 | 170 |
| Elongation at break (%) | 400 | 370 | 390 | 350 |
| Permanent elongation at 100 % elongation | 25 | 20 | 25 | 20 |
| Hardness | 100 | 100 | 100 | 100 |
| Retention ratio (%) of tensile strength at 80 °C | 70 | 65 | 40 | 35 |

In Comparative Application Examples 66 to 67, block copolymer D' corresponds to block copolymer before epoxidation.

It is noted that PBT, PA6 and EPDM are a polybutylene terephthalate, a polyamide and an ethylene-propylene diene copolymer, respectively.

Table 18 clearly show that the compositions in Application Examples 88 and 89 have excellent retention ratio of tensile strength at heated conditions compared to the compositions in Comparative Application Examples 66 and 67 without any losses in other properties.

[Application Examples 90, 91, 92, Comparative Application Examples 68 and 69/Observation of fractured surface by scanning electron microscopic photograph]

Three test pieces were molded from three polybutylene terephthalate compositions composed of 90 parts by weight of a polybutylene terephthalate and respective 10 parts by weight of the starting block copolymers (TR2000 and Kaliflex TR2000) employed in Synthesis Examples 1 and 7, epoxy-modified aromatic vinyl-conjugated diene block copolymers G, A and H obtained in Synthesis Examples 7, 1 and 8, respectively.

The test pieces were fractured after cooling in liquified nitrogen to observe the surface with a scanning electron microscope.

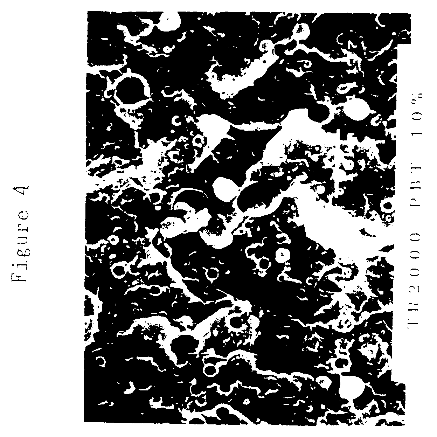

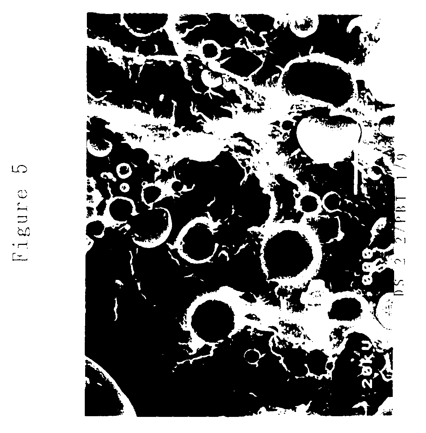

Figures 4 and 5 are photographs of fractured surface observed with a scanning electron microscope related to test pieces molded from a polybutylene terephthalate composition composed of polybutylene terephthalate and starting block copolymers employed in Synthesis Examples 1 and 7.

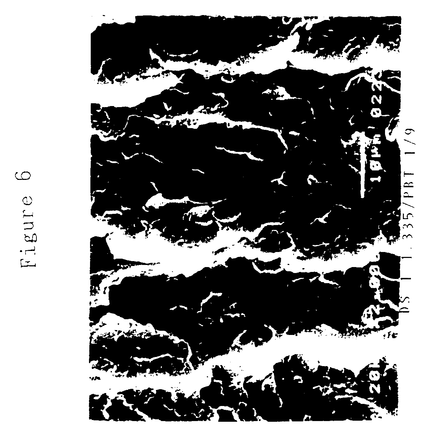

Figures 6, 7 and 8 are those of fractured surface observed with a scanning electron microscope related to test pieces molded from polybutylene terephthalate compositions composed of polybutylene terephthalate and epoxy-modified aromatic vinyl-conjugated diene block copolymers G, A and H obtained in Synthesis Examples 7, 1 and 8, respectively.

Figures 4 and 5 clearly show that the respective starting block copolymer components have large particle size.

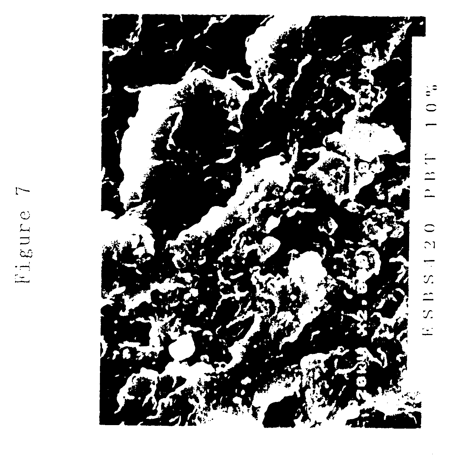

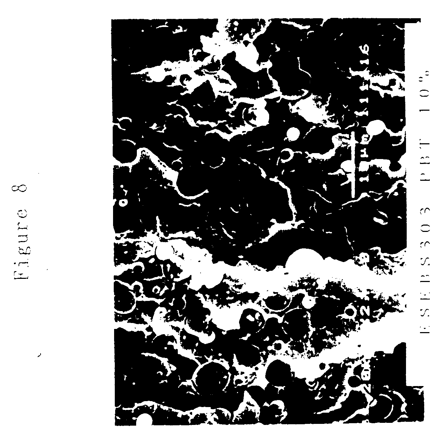

Figures 6 and 7 clearly show that the epoxy-modified block copolymer components exhibit small particle size, that is, a more excellent compatibility. Figures 8 shows that the epoxy-modified block copolymer components don't exhibit particle size, and exhibit the presence of an interface between the polybutylene terephthalate component and epoxy-modified aromatic vinyl-conjugated diene block copolymer component, that is somewhat shows a poorer compatibility than those of Figures 6 and 7 because of a higher epoxy equivalent.

While the invention has been described in detail and with reference to specific embodiments thereof, it will be apparent to one skilled in the art that various changes and modifications can be made therein without departing from the spirit and scope thereof.

## Claims

1. A thermoplastic resin composition which comprises (a) a thermoplastic resin and (c ) an impact modifier comprising an epoxy-modified aromatic vinyl-conjugated diene block copolymer in which (i) a polymer block consisting of an aromatic vinyl compound and (ii) a polymer block consisting of a compound having a conjugated double bond are included, wherein remaining double bonds are partially or completely epoxidized.

2. A thermoplastic resin composition as set forth in claim 1, wherein said (a) is a resin having an affinity to an aromatic vinyl polymer.

3. A thermoplastic resin composition as set forth in claim 1, wherein said (a) is a resin having reactivity to an epoxy group.

4. A thermoplastic resin composition as set forth in claim 1, wherein said resin having an affinity to an aromatic vinyl polymer is a modified polyphenylene ether or a polycarbonate.

5. A thermoplastic resin composition as set forth in claim 1, wherein said resin having reactivity to an epoxy group is at least one selected from the group consisting of a polyamide, a polyester elastomer, a polybutylene terephthalate, a polyamide elastomer, an ethylene/propylene-based rubber, a maleic anhydride-grafted SEBS and a polyoxymethylene.

Figure 1

Figure 2

Figure 3

Figure 4

TR2000 PBT 10%

Figure 5

Figure 6

Figure 7

ESBS-120 PBT 10%

Figure 8